# EUROPEAN PATENT APPLICATION

(11) **EP 4 664 900 A1**
(43) Date of publication of application: **17.12.2025**
(21) Application number: 24777671.9
(22) Date of filing: 07.03.2024
(51) Int. Cl.: H04N 21/439

(54) **VIDEO RECORDING METHOD, VIDEO PLAYBACK METHOD, AND ELECTRONIC DEVICE**

(30) Priority: 28.03.2023 CN 202310315460
(71) Applicant: Huawei Technologies Co., Ltd., Shenzhen, Guangdong 518129 (CN)
(72) Inventor: CHEN, Jiayi, Shenzhen, Guangdong 518129 (CN); LI, Chunjian, Shenzhen, Guangdong 518129 (CN); ZHU, Mengyao, Shenzhen, Guangdong 518129 (CN); LUO, You, Shenzhen, Guangdong 518129 (CN); DING, Yujiang, Shenzhen, Guangdong 518129 (CN)
(74) Representative: Pfenning, Meinig & Partner mbB
(86) International application number: PCT/CN2024/080476
(87) International publication number: WO 2024/198881

(57) **Abstract**

Embodiments of this application provide a video recording method, a video playing method, and an electronic device. The video recording method includes: displaying a first recording interface of a video, where the first recording interface includes an audio control and a recording control, and the first recording interface includes a target object; using virtual audio as audio for video recording in response to a first operation performed on the audio control, where the virtual audio is audio related to the target object; recording a first video in response to a second operation performed on the recording control; storing the first video in response to a third operation performed on the recording control; displaying a first to-be-played interface, where the first to-be-played interface includes a first play control; and playing the first video in response to a fourth operation performed on the first play control, where when the first video is played, audio of the first video includes the virtual audio. In this way, a user has a stronger sense of immersion when watching a video, which helps improve user experience.

## Description

This application claims priority to Chinese Patent Application No. 202310315460.2, filed with the China National Intellectual Property Administration on March 28, 2023, and entitled "VIDEO RECORDING METHOD, VIDEO PLAYING METHOD, AND ELECTRONIC DEVICE", which is incorporated herein by reference in its entirety.

### TECHNICAL FIELD

Embodiments of this application relate to the terminal field, and more specifically, to a video recording method, a video playing method, and an electronic device.

### BACKGROUND

Currently, electronic devices such as mobile phones have become necessities in people's daily lives, and a video shooting function of the electronic devices is widely and frequently used by users. In a video shooting process, as one of key components on the electronic device, a microphone may capture a sound of a photographed subject, to load the sound into a corresponding video. However, because some photographed subjects make weak sounds, and there is susceptibility to interference from noise in an environment within a specific shooting distance, the microphone cannot obtain a sound of a corresponding photographed subject. Consequently, a shot video cannot well reflect a status of the photographed subject, resulting in poor user experience.

### SUMMARY

Embodiments of this application provide a video recording method, a video playing method, and an electronic device. A video can well reflect a status of a photographed subject, which helps improve user experience.

According to a first aspect, a video playing method is provided. The method includes: obtaining a first video and first audio corresponding to the first video; and playing the first video and second audio that matches the first video. The first audio includes first target audio, intensity of the first audio is less than a first threshold, the second audio includes virtual audio, and intensity of the virtual audio is greater than or equal to the first threshold. Alternatively, the first audio includes first ambient audio and first target audio, a signal-to-noise ratio of the first audio is less than a second threshold, the second audio includes the first ambient audio and virtual audio, intensity of the virtual audio is greater than or equal to the second threshold, and a signal-to-noise ratio of the second audio is greater than the signal-to-noise ratio of the first audio. Both the first target audio and the virtual audio are audio related to a target object, the first target audio is audio that exists in a scene in which the first video is recorded, and the virtual audio is audio that does not exist in the scene in which the first video is recorded.

When the first audio corresponding to the first video includes the first target audio, and the intensity of the first audio is less than the first threshold, because the intensity of the first audio related to the target object is less than the first threshold, when the first video and the first audio corresponding to the first video are played, a user almost cannot hear the first audio corresponding to the first video. However, in the technical solution of this application, the virtual audio related to the target object may be added, and the virtual audio may be used as audio of the first video and played. In this way, when the intensity of the first audio corresponding to the first video is low, virtual rendering may be performed on the first audio corresponding to the first video. In this case, because the intensity of the virtual audio is greater than or equal to the first threshold, when the first video and the virtual audio that matches the first video are played, the user can hear the virtual audio related to the target object. In addition, the added virtual audio is also audio related to the target object, and therefore the virtual audio can well reflect a status of a photographed subject. In this way, the user has a stronger sense of immersion when watching the first video, which helps improve user experience.

When the first audio includes the first ambient audio and the first target audio, and the signal-to-noise ratio of the first audio is less than the second threshold, because the signal-to-noise ratio of the first audio is less than the second threshold, when the first video and the first audio corresponding to the first video are played, a user almost cannot hear the first target audio in the first audio corresponding to the first video. However, in the technical solution of this application, the virtual audio related to the target object may be added on the basis of the first ambient audio, a ratio of the virtual audio to the first ambient audio may be increased, and then the first ambient audio and the virtual audio may be used as audio of the first video and played. In this way, when intensity of the first target audio in the first audio corresponding to the first video is low, virtual rendering may be performed on the first target audio in the first audio corresponding to the first video. In this case, because the signal-to-noise ratio of the second audio is greater than the signal-to-noise ratio of the first audio, when the first video and the second audio (the virtual audio and the first ambient audio) that matches the first video are played, the user can hear the virtual audio related to the target object. In addition, the added virtual audio is also audio related to the target object, and therefore the virtual audio can well reflect a status of a photographed subject. In this way, the user has a stronger sense of immersion when watching the first video, which helps improve user experience.

With reference to the first aspect, in some implementations of the first aspect, before playing the first video and the second audio that matches the first video, the method further includes: determining, based on content of the first video, that a first preset scene exists in the first video, where the target object is related to the first preset scene.

In the foregoing technical solution, both the first target audio and the virtual audio are audio related to the target object, and the target object is related to the first preset scene. In this case, both the first target audio and the virtual audio are audio of the target object related to the first preset scene. When the first preset scene exists in the first video, the added virtual audio is more suitable for a status of the target object in the first video. This helps further improve user experience.

With reference to the first aspect, in some implementations of the first aspect, before determining, based on the content of the first video, that the first preset scene exists in the first video, the method further includes: determining, based on a shooting parameter of the first video, that the first video meets a first condition. The shooting parameter includes at least one of the following: a shooting focal length, a shooting range, and a proportion of an object, and the object is any object in the first video. The first condition includes at least one of the following: The shooting focal length of the first video becomes smaller, the shooting range of the first video changes, and the proportion of the object is greater than or equal to a third threshold.

If there are a plurality of first preset scenes in a preset scene library, for each first preset scene, an electronic device needs to determine whether the first preset scene exists in the first video. In the foregoing technical solution, if it is first determined, before it is determined whether the first preset scene exists in the first video, that the first video meets the first condition, the electronic device considers that there is a high probability that the first preset scene exists in the first video. In this way, the electronic device can increase a frequency of determining whether the first preset scene exists in the first video, thereby reducing power consumption of the electronic device.

With reference to the first aspect, in some implementations of the first aspect, a first interface includes a first control, the first interface is an interface for obtaining the first video, and the method further includes: in response to a first operation performed on the first control, determining, based on the content of the first video, whether the first preset scene exists in the first video.

With reference to the first aspect, in some implementations of the first aspect, before playing the virtual audio, the method further includes: determining that there is an object status change event for the target object in the first video.

In the foregoing technical solution, the first video and the second audio are played only when it is determined that there is an object status change event for the target object in the first video. In this way, power consumption of a play device can be reduced.

With reference to the first aspect, in some implementations of the first aspect, before playing the first video and the virtual audio, the method further includes: performing audio-visual synchronization between the virtual audio and the first video.

In the foregoing technical solution, the first video and the second audio are played only after audio-visual synchronization is performed between the virtual audio and the first video. In this way, a matching degree between the first video and the second audio can be improved, which helps further improve user experience.

With reference to the first aspect, in some implementations of the first aspect, the first video is a preview video or a video being recorded, and performing audio-visual synchronization between the virtual audio and the first video includes: predicting a status of the target object in the first video based on the first video, and obtaining a first status change time of the target object; and playing the virtual audio in the first status change time.

With reference to the first aspect, in some implementations of the first aspect, the first video is a recorded video, and performing audio-visual synchronization between the virtual audio and the first video includes: determining a second status change time of the target object in the first video based on the first video; and playing the virtual audio in the second status change time.

With reference to the first aspect, in some implementations of the first aspect, the intensity of the virtual audio is related to at least one of the following: a distance between the target object in the first video and an electronic device, a recording focal length of the first video, and a proportion of the target object in the first video, and the electronic device is a device for recording the first video.

In the foregoing technical solution, the intensity of the virtual audio is related to the distance between the target object in the first video and the electronic device, the recording focal length of the first video, and/or the proportion of the target object in the first video. In this way, a matching degree between the first video and the second audio can be improved, which helps further improve user experience.

With reference to the first aspect, in some implementations of the first aspect, a second interface includes a second control, the second interface is an interface for playing the first video, and after playing the virtual audio, the method further includes: displaying a third control, a fourth control, a fifth control, and a sixth control in the second interface in response to a second operation performed on the second control; and changing the virtual audio in response to a third operation performed on the third control; and/or performing audio-visual synchronization between the virtual audio and the first video in response to a fourth operation performed on the fourth control; and/or adjusting the intensity of the virtual audio and/or intensity of the second audio in response to a fifth operation performed on the fifth control; and/or skipping playing the virtual audio in response to a sixth operation performed on the sixth control.

When the user is dissatisfied with a rendering effect of audio (the virtual audio or the second audio) corresponding to the first video, the user may adjust the rendering effect of the audio corresponding to the first video by using the third control, the fourth control, the fifth control, or the sixth control in the second interface. This helps further improve user experience.

According to a second aspect, a video playing method is provided. The method includes: obtaining a second video and third audio corresponding to the second video, where a signal-to-noise ratio of the third audio is greater than or equal to a second threshold; and playing the second video and fourth audio corresponding to the second video, where content of the fourth audio is the same as content of the third audio, and a signal-to-noise ratio of the fourth audio is greater than the signal-to-noise ratio of the third audio.

According to the foregoing technical solution, when the signal-to-noise ratio of the third audio corresponding to the second video is greater than or equal to the second threshold, the signal-to-noise ratio of the third audio may be increased to obtain the fourth audio. In this way, when an effect of a sound related to a status change of a photographed subject is poor, a function of adaptively enhancing the sound related to the status change of the photographed subject is implemented. In this case, because the signal-to-noise ratio of the fourth audio is greater than the signal-to-noise ratio of the third audio, the played fourth audio can well reflect a status of the photographed subject. In this way, a user has a stronger sense of immersion when watching the second video, which helps improve user experience.

With reference to the second aspect, in some implementations of the second aspect, before the second video and the fourth audio corresponding to the second video are played, it is determined, based on content of the second video and/or the content of the third audio, that a second preset scene exists in the second video.

With reference to the second aspect, in some implementations of the second aspect, determining, based on the content of the third audio, that the second preset scene exists in the second video includes: when the third audio includes second target audio, determining that the second preset scene exists in the second video, where the second target audio is related to the second preset scene.

With reference to the second aspect, in some implementations of the second aspect, before determining, based on the content of the second video and/or the content of the third audio, that the second preset scene exists in the second video, the method further includes: determining, based on a shooting parameter of the second video, that the second video meets a second condition. The shooting parameter includes at least one of the following: a shooting focal length, a shooting range, and a proportion of an object, and the object is any object in the second video. The second condition includes at least one of the following: The shooting focal length of the second video becomes smaller, the shooting range of the second video changes, and the proportion of the object is greater than or equal to a fourth threshold.

If there are a plurality of second preset scenes in a preset scene library, for each second preset scene, an electronic device needs to determine whether the second preset scene exists in the second video. In the foregoing technical solution, if it is first determined, before it is determined whether the second preset scene exists in the second video, that the second video meets the second condition, the electronic device considers that there is a high probability that the second preset scene exists in the second video. In this way, the electronic device can increase a frequency of determining whether the second preset scene exists in the second video, thereby reducing power consumption of the electronic device.

With reference to the second aspect, in some implementations of the second aspect, a first interface includes a first control, the first interface is an interface for obtaining the second video, and the method further includes: in response to a first operation performed on the first control, determining, based on the content of the second video and/or the content of the third audio, whether the second preset scene exists in the second video.

With reference to the second aspect, in some implementations of the second aspect, before playing the second video and the fourth audio corresponding to the second video, the method further includes: determining that there is an object status change event for a target object in the second video, where the target object is related to the second preset scene.

In the foregoing technical solution, the second video and the fourth audio are played only when it is determined that there is an object status change event for the target object in the second video. In this way, power consumption of a play device can be reduced.

With reference to the second aspect, in some implementations of the second aspect, the signal-to-noise ratio of the fourth audio is related to at least one of the following: a distance between the target object in the second video and an electronic device, a recording focal length of the second video, and a proportion of the target object in the second video, and the electronic device is a device for recording the second video.

In the foregoing technical solution, the signal-to-noise ratio of the fourth audio is related to the distance between the target object in the second video and the electronic device, the recording focal length of the second video, and/or the proportion of the target object in the second video. In this way, a matching degree between the second video and the fourth audio can be improved, which helps further improve user experience.

With reference to the second aspect, in some implementations of the second aspect, a second interface includes a second control, the second interface is an interface for playing the second video, and after playing the second video and the fourth audio corresponding to the second video, the method further includes: displaying a third control, a fourth control, a fifth control, and a sixth control in the second interface in response to a second operation performed on the second control; and changing the fourth audio in response to a third operation performed on the third control; and/or performing audio-visual synchronization between the fourth audio and the second video in response to a fourth operation performed on the fourth control; and/or adjusting intensity of the fourth audio and/or intensity of third target audio in the fourth audio in response to a fifth operation performed on the fifth control, where the third target audio is related to the second preset scene; and/or skipping playing the fourth audio in response to a sixth operation performed on the sixth control.

When the user is dissatisfied with a rendering effect of audio (the fourth audio) corresponding to the second video, the user may adjust the rendering effect of the audio corresponding to the second video by using the third control, the fourth control, the fifth control, or the sixth control in the second interface. This helps further improve user experience.

According to a third aspect, a video playing method is provided. The method includes: displaying an interface of a third video, and playing audio corresponding to the third video. A recording mode of the third video is a slow-motion recording mode or a fast-motion recording mode. The interface includes a first control, and the first control is used to adjust pitch of the audio.

When the third video is shot in the slow-motion recording mode or the fast-motion recording mode, the pitch of the audio corresponding to the third video is distorted. Consequently, a user is usually dissatisfied with the audio corresponding to the third video. Therefore, in this embodiment of this application, the user may adjust the pitch corresponding to the third video by using the first control, which helps improve user experience.

With reference to the third aspect, in some implementations of the third aspect, the pitch of the audio is adjusted to a target pitch value in response to a first operation performed on the first control.

With reference to the third aspect, in some implementations of the third aspect, the interface further includes a switch, and when the switch is in an on state, the audio corresponding to the third video is audio obtained through time stretching with pitch preservation.

With reference to the third aspect, in some implementations of the third aspect, in the slow-motion recording mode or the fast-motion recording mode, the switch is in an off state by default.

According to a fourth aspect, a video recording method is provided. The method includes: displaying a first recording interface of a video, where the first recording interface includes an audio control and a recording control, and the first recording interface includes a target object; using virtual audio as audio for video recording in response to a first operation performed on the audio control, where the virtual audio is audio related to the target object; recording a first video in response to a second operation performed on the recording control; storing the first video in response to a third operation performed on the recording control; displaying a first to-be-played interface, where the first to-be-played interface includes a first play control; and playing the first video in response to a fourth operation performed on the first play control, where when the first video is played, audio of the first video includes the virtual audio.

Because the virtual audio is audio related to the target object in the first video, the virtual audio can well reflect a status of a photographed subject. In this way, a user has a stronger sense of immersion when watching the first video, which helps improve user experience.

With reference to the fourth aspect, in some implementations of the fourth aspect, the method includes: displaying a second recording interface of a video, where the second recording interface includes the audio control and the recording control, and the second recording interface includes the target object; recording a second video in response to a fifth operation performed on the recording control, where the audio control is not selected; storing the second video in response to a sixth operation performed on the recording control; displaying a second to-be-played interface, where the second to-be-played interface includes a second play control; and playing the second video in response to a seventh operation performed on the second play control, where when the second video is played, audio of the second video does not include the virtual audio, or audio of the second video is inconsistent with the virtual audio.

With reference to the fourth aspect, in some implementations of the fourth aspect, playing the first video includes: playing the virtual audio in a target time, where the target time is a time in which a status of the target object changes.

With reference to the fourth aspect, in some implementations of the fourth aspect, the first to-be-played interface further includes an edit control, and the method includes: displaying at least one of the following in the first to-be-played interface in response to an operation performed on the edit control: a sound effect replacement control, a time alignment control, a sound effect rendering intensity control, and a sound effect deletion control. The sound effect replacement control is used to change the virtual audio. The time alignment control is used to perform audio-visual synchronization between the virtual audio and the first video. The sound effect rendering intensity control is used to adjust intensity of the virtual audio. The sound effect deletion control is used to delete the virtual audio from a sound effect corresponding to the first video.

With reference to the fourth aspect, in some implementations of the fourth aspect, the intensity of the virtual audio is related to at least one of the following: a distance between the target object in the first video and an electronic device, a recording focal length of the first video, and a proportion of the target object in the first video, and the electronic device is a device for recording the first video.

In the foregoing technical solution, the intensity of the virtual audio is related to the distance between the target object in the video and the electronic device, the recording focal length of the video, and/or the proportion of the target object in the video. In this way, a matching degree between the video and the virtual audio can be improved, which helps further improve user experience.

With reference to the fourth aspect, in some implementations of the fourth aspect, before recording the first video, the method includes: displaying an icon in the first recording interface, where the icon indicates a video recording mode corresponding to a target preset scene, and the target preset scene is related to the virtual audio.

According to a fifth aspect, a video playing apparatus is provided. The apparatus includes: a processing unit, configured to obtain a first video and first audio corresponding to the first video; and a play unit, configured to play the first video and second audio that matches the first video. The first audio includes first target audio, intensity of the first audio is less than a first threshold, the second audio includes virtual audio, and intensity of the virtual audio is greater than or equal to the first threshold. Alternatively, the first audio includes first ambient audio and first target audio, a signal-to-noise ratio of the first audio is less than a second threshold, the second audio includes the first ambient audio and virtual audio, intensity of the virtual audio is greater than or equal to the second threshold, and a signal-to-noise ratio of the second audio is greater than the signal-to-noise ratio of the first audio. Both the first target audio and the virtual audio are audio related to a target object, the first target audio is audio that exists in a scene in which the first video is recorded, and the virtual audio is audio that does not exist in the scene in which the first video is recorded.

With reference to the fifth aspect, in some implementations of the fifth aspect, the processing unit is further configured to determine, based on content of the first video, that a first preset scene exists in the first video, where the target object is related to the first preset scene.

With reference to the fifth aspect, in some implementations of the fifth aspect, the processing unit is further configured to determine, based on a shooting parameter of the first video, that the first video meets a first condition. The shooting parameter includes at least one of the following: a shooting focal length, a shooting range, and a proportion of an object, and the object is any object in the first video. The first condition includes at least one of the following: The shooting focal length of the first video becomes smaller, the shooting range of the first video changes, and the proportion of the object is greater than or equal to a third threshold.

With reference to the fifth aspect, in some implementations of the fifth aspect, a first interface includes a first control, the first interface is an interface for obtaining the first video, and the processing unit is further configured to: in response to a first operation performed on the first control, determine, based on the content of the first video, whether the first preset scene exists in the first video.

With reference to the fifth aspect, in some implementations of the fifth aspect, the processing unit is further configured to determine that there is an object status change event for the target object in the first video.

With reference to the fifth aspect, in some implementations of the fifth aspect, the processing unit is further configured to perform audio-visual synchronization between the virtual audio and the first video.

With reference to the fifth aspect, in some implementations of the fifth aspect, the processing unit is further configured to: predict a status of the target object in the first video based on the first video, and obtain a first status change time of the target object; and the play unit is further configured to play the virtual audio in the first status change time.

With reference to the fifth aspect, in some implementations of the fifth aspect, the first video is a recorded video, and the processing unit is further configured to determine a second status change time of the target object in the first video based on the first video; and the play unit is further configured to play the virtual audio in the second status change time.

With reference to the fifth aspect, in some implementations of the fifth aspect, the intensity of the virtual audio is related to at least one of the following: a distance between the target object in the first video and an electronic device, a recording focal length of the first video, and a proportion of the target object in the first video, and the electronic device is a device for recording the first video.

With reference to the fifth aspect, in some implementations of the fifth aspect, a second interface includes a second control, the second interface is an interface for playing the first video, and the apparatus further includes a display unit, configured to display a third control, a fourth control, a fifth control, and a sixth control in the second interface in response to a second operation performed on the second control; and the processing unit is further configured to: change the virtual audio in response to a third operation performed on the third control; and/or perform audio-visual synchronization between the virtual audio and the first video in response to a fourth operation performed on the fourth control; and/or adjust the intensity of the virtual audio and/or intensity of the second audio in response to a fifth operation performed on the fifth control; and/or skip playing the virtual audio in response to a sixth operation performed on the sixth control.

For technical effects of the fifth aspect and the possible implementations, refer to the related descriptions of the first aspect. Details are not described herein again.

According to a sixth aspect, a video playing apparatus is provided. The apparatus includes: a processing unit, configured to obtain a second video and third audio corresponding to the second video, where a signal-to-noise ratio of the third audio is greater than or equal to a second threshold; and a play unit, configured to play the second video and fourth audio corresponding to the second video, where content of the fourth audio is the same as content of the third audio, and a signal-to-noise ratio of the fourth audio is greater than the signal-to-noise ratio of the third audio.

With reference to the sixth aspect, in some implementations of the sixth aspect, the processing unit is further configured to determine, based on content of the second video and/or the content of the third audio, that a second preset scene exists in the second video.

With reference to the sixth aspect, in some implementations of the sixth aspect, the processing unit is further specifically configured to: when the third audio includes second target audio, determine that the second preset scene exists in the second video, where the second target audio is related to the second preset scene.

With reference to the sixth aspect, in some implementations of the sixth aspect, the processing unit is further configured to determine, based on a shooting parameter of the second video, that the second video meets a second condition. The shooting parameter includes at least one of the following: a shooting focal length, a shooting range, and a proportion of an object, and the object is any object in the second video. The second condition includes at least one of the following: The shooting focal length of the second video becomes smaller, the shooting range of the second video changes, and the proportion of the object is greater than or equal to a fourth threshold.

With reference to the sixth aspect, in some implementations of the sixth aspect, a first interface includes a first control, the first interface is an interface for obtaining the second video, and the processing unit is further configured to: in response to a first operation performed on the first control, determine, based on the content of the second video and/or the content of the third audio, whether the second preset scene exists in the second video.

With reference to the sixth aspect, in some implementations of the sixth aspect, the processing unit is further configured to determine that there is an object status change event for a target object in the second video, where the target object is related to the second preset scene.

With reference to the sixth aspect, in some implementations of the sixth aspect, the signal-to-noise ratio of the fourth audio is related to at least one of the following: a distance between the target object in the second video and an electronic device, a recording focal length of the second video, and a proportion of the target object in the second video, and the electronic device is a device for recording the second video.

With reference to the sixth aspect, in some implementations of the sixth aspect, a second interface includes a second control, the second interface is an interface for playing the second video, and the apparatus further includes a display unit, configured to display a third control, a fourth control, a fifth control, and a sixth control in the second interface in response to a second operation performed on the second control; and the processing unit is further configured to: change the fourth audio in response to a third operation performed on the third control; and/or perform audio-visual synchronization between the fourth audio and the second video in response to a fourth operation performed on the fourth control; and/or adjust intensity of the fourth audio and/or intensity of third target audio in the fourth audio in response to a fifth operation performed on the fifth control, where the third target audio is related to the second preset scene; and/or skip playing the fourth audio in response to a sixth operation performed on the sixth control.

For technical effects of the sixth aspect and the possible implementations, refer to the related descriptions of the second aspect. Details are not described herein again.

According to a seventh aspect, a video playing apparatus is provided. The apparatus includes: a display unit, configured to display an interface of a third video; and a play unit, configured to play audio corresponding to the third video. A recording mode of the third video is a slow-motion recording mode or a fast-motion recording mode. The interface includes a first control, and the first control is used to adjust pitch of the audio.

With reference to the seventh aspect, in some implementations of the seventh aspect, the apparatus further includes a processing unit, configured to adjust the pitch of the audio to a target pitch value in response to a first operation performed on the first control.

With reference to the seventh aspect, in some implementations of the seventh aspect, the interface further includes a switch, and when the switch is in an on state, the audio corresponding to the third video is audio obtained through time stretching with pitch preservation.

With reference to the seventh aspect, in some implementations of the seventh aspect, in the slow-motion recording mode or the fast-motion recording mode, the switch is in an off state by default.

For technical effects of the seventh aspect and the possible implementations, refer to the related descriptions of the third aspect. Details are not described herein again.

According to an eighth aspect, a video recording apparatus is provided. The apparatus includes: a display unit, configured to display a first recording interface of a video, where the first recording interface includes an audio control and a recording control, and the first recording interface includes a target object; a processing unit, configured to use virtual audio as audio for video recording in response to a first operation performed on the audio control, where the virtual audio is audio related to the target object; a recording unit, configured to record a first video in response to a second operation performed on the recording control; a storage unit, configured to store the first video in response to a third operation performed on the recording control, where the display unit is further configured to display a first to-be-played interface, where the first to-be-played interface includes a first play control; and a play unit, configured to play the first video in response to a fourth operation performed on the first play control, where when the first video is played, audio of the first video includes the virtual audio.

With reference to the eighth aspect, in some implementations of the eighth aspect, the display unit is further configured to display a second recording interface of a video, where the second recording interface includes the audio control and the recording control, and the second recording interface includes the target object; the recording unit is further configured to record a second video in response to a fifth operation performed on the recording control, where the audio control is not selected; the storage unit is further configured to store the second video in response to a sixth operation performed on the recording control; the display unit is further configured to display a second to-be-played interface, where the second to-be-played interface includes a second play control; and the play unit is configured to play the second video in response to a seventh operation performed on the second play control, where when the second video is played, audio of the second video does not include the virtual audio, or audio of the second video is inconsistent with the virtual audio.

With reference to the eighth aspect, in some implementations of the eighth aspect, the play unit is specifically configured to play the virtual audio in a target time, where the target time is a time in which a status of the target object changes.

With reference to the eighth aspect, in some implementations of the eighth aspect, the first to-be-played interface further includes an edit control, and the display unit is further configured to display at least one of the following in the first to-be-played video interface in response to an operation performed on the edit control: a sound effect replacement control, a time alignment control, a sound effect rendering intensity control, and a sound effect deletion control. The sound effect replacement control is used to change the virtual audio. The time alignment control is used to perform audio-visual synchronization between the virtual audio and the first video. The sound effect rendering intensity control is used to adjust intensity of the virtual audio. The sound effect deletion control is used to delete the virtual audio from a sound effect corresponding to the first video.

With reference to the eighth aspect, in some implementations of the eighth aspect, the intensity of the virtual audio is related to at least one of the following: a distance between the target object in the first video and an electronic device, a recording focal length of the first video, and a proportion of the target object in the first video, and the electronic device is a device for recording the first video.

With reference to the eighth aspect, in some implementations of the eighth aspect, before recording the first video, the method includes: displaying an icon in the first recording interface, where the icon indicates that the electronic device is in a video recording mode corresponding to a target preset scene, and the target preset scene is related to the virtual audio.

For technical effects of the eighth aspect and the possible implementations, refer to the related descriptions of the fourth aspect. Details are not described herein again.

According to a ninth aspect, an electronic device is provided. The electronic device is configured to perform the method according to any one of the first aspect to the fourth aspect and some possible implementations of the first aspect to the fourth aspect. The electronic device includes a module, unit, or means (means) for implementing the foregoing method. The module, unit, or means may be implemented by hardware, by software, or by executing corresponding software by hardware. The hardware or the software includes one or more modules or units corresponding to the foregoing function, for example, a processing module or unit, or a play module or unit.

According to a tenth aspect, an electronic device is provided, including one or more processors, one or more memories, and one or more programs. The one or more programs are stored in the memory, and when instructions are executed by the one or more processors, the electronic device is enabled to perform the method according to any one of the first aspect to the fourth aspect and some possible implementations of the first aspect to the fourth aspect.

According to an eleventh aspect, a readable storage medium is provided, including instructions. When the instructions are run on an electronic device, the electronic device is enabled to perform the method according to any one of the first aspect to the fourth aspect and some possible implementations of the first aspect to the fourth aspect.

According to a twelfth aspect, a program product is provided. The program product includes program code. When the program code is run on a device, the method according to any one of the first aspect to the fourth aspect and some possible implementations of the first aspect to the fourth aspect is performed.

According to a thirteenth aspect, a chip is provided, including at least one processor and an interface circuit. The interface circuit is configured to provide program instructions or data to the at least one processor. The at least one processor is configured to execute the program instructions, to implement the method according to any one of the first aspect to the fourth aspect and some possible implementations of the first aspect to the fourth aspect.

It may be understood that each of the electronic device, the readable storage medium, and the program product provided above is configured to perform the corresponding method provided above. Therefore, for technical effects that can be achieved by the electronic device, the readable storage medium, and the program product, refer to the technical effects of the corresponding method provided above. Details are not described herein again.

### BRIEF DESCRIPTION OF DRAWINGS

FIG. 1 is a diagram of a hardware structure of a device according to an embodiment of this application;
FIG. 2 is a block diagram of a software structure of a device according to an embodiment of this application;
FIG. 3(a) and FIG. 3(b) to FIG. 9(a), FIG. 9(b), and FIG. 9(c) show GUIs of a mobile phone according to an embodiment of this application;
FIG. 10 to FIG. 14 are schematic flowcharts of a video playing method according to an embodiment of this application;
FIG. 15 is a diagram of original audio and audio corresponding to a third video in time domain according to an embodiment of this application;
FIG. 16 is a schematic flowchart of a video recording method according to an embodiment of this application;
FIG. 17 is a block diagram of an example device according to an embodiment of this application;
FIG. 18 is a block diagram of another example device according to an embodiment of this application;
FIG. 19 is a block diagram of still another example device according to an embodiment of this application; and
FIG. 20 is a block diagram of still another example device according to an embodiment of this application.

### DESCRIPTION OF EMBODIMENTS

The following describes technical solutions in embodiments of this application with reference to accompanying drawings.

The electronic device in embodiments of this application includes user equipment, an access terminal, a subscriber unit, a subscriber station, a mobile station, a remote station, a remote terminal, a mobile device, a terminal, a wireless communication device, a user agent, or a user apparatus. The electronic device may further include a cellular phone, a cordless phone, a session initiation protocol phone, a personal digital assistant, a handheld device with a wireless communication function, a computing device or another processing device connected to a wireless modem, a vehicle-mounted device, a wearable device (for example, a Bluetooth headset or a smartwatch), a device in a future 5G network, a device in a future evolved public land mobile communication network, or the like.

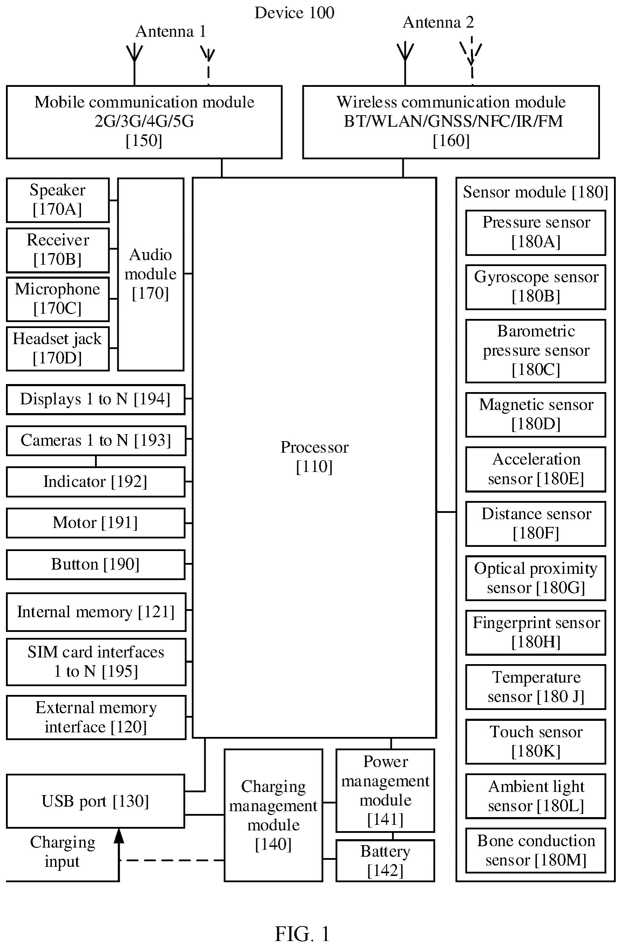

For example, FIG. 1 is a diagram of a structure of an example device 100 according to an embodiment of this application.

For example, as shown in FIG. 1, the device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the device 100. In some other embodiments of this application, the device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It may be understood that an interface connection relationship between the modules that is shown in this embodiment of this application is merely an example for description, and does not constitute a limitation on the structure of the device 100. In some other embodiments of this application, the device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the device 100. The charging management module 140 may further supply power to the device through the power management module 141 while charging the battery 142. The power management module 141 is configured to be connected to the battery 142, the charging management module 140, and the processor 110.

A wireless communication function of the device 100 may be implemented through the antenna 1, the antenna 2, the mobile communication module 150, the wireless communication module 160, the modem processor, the baseband processor, and the like.

The mobile communication module 150 may provide a wireless communication solution that is applied to the device 100 and that includes 2G/3G/4G/5G or the like.

In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the device 100, the antenna 1 and the mobile communication module 150 are coupled, and the antenna 2 and the wireless communication module 160 are coupled, so that the device 100 can communicate with a network and another device by using a wireless communication technology.

The device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. In some embodiments, the device 100 may include one or N displays 194, where N is a positive integer greater than 1.

The device 100 may implement a shooting function through the ISP, the camera 193, the video codec, the GPU, the display 194, the application processor, and the like.

The external memory interface 120 may be configured to be connected to an external memory card, for example, a micro SD card, to extend a storage capability of the device 100. The internal memory 121 may be configured to store computer-executable program code. The executable program code includes instructions. The processor 110 runs the instructions stored in the internal memory 121, to perform various functional applications and data processing of the device 100.

The device 100 may implement an audio function through the audio module 170, the speaker 170A, the receiver 170B, the microphone 170C, the headset jack 170D, the application processor, and the like. The audio module 170 is configured to convert digital audio information into an analog audio signal for output, and is further configured to convert an analog audio input into a digital audio signal. The speaker 170A, also referred to as a "loudspeaker", is configured to convert an electrical audio signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to be connected to a wired headset.

The pressure sensor 180A is configured to sense a pressure signal, and may convert the pressure signal into an electrical signal. The gyroscope sensor 180B may be configured to determine a motion posture of the device 100. The barometric pressure sensor 180C is configured to measure barometric pressure. The acceleration sensor 180E may detect magnitudes of acceleration of the device 100 in various directions (usually on three axes). The distance sensor 180F is configured to measure a distance. The fingerprint sensor 180H is configured to capture a fingerprint. The touch sensor 180K is also referred to as a touch panel. The touch sensor 180K may be disposed on the display 194, and the touch sensor 180K and the display 194 form a touchscreen, which is also referred to as a "touch control screen". The bone conduction sensor 180M may obtain a vibration signal.

The button 190 includes a power button, a volume button, or the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to be connected to a SIM card.

A software system of the device 100 shown in FIG. 1 may use a layered architecture, an event-driven architecture, a microkernel architecture, a microservice architecture, or a cloud architecture.

The software system is not limited in embodiments of this application. For example, the software system may be an Android^{®} system, an iOS^{®} system, or a HarmonyOS^{®} system.

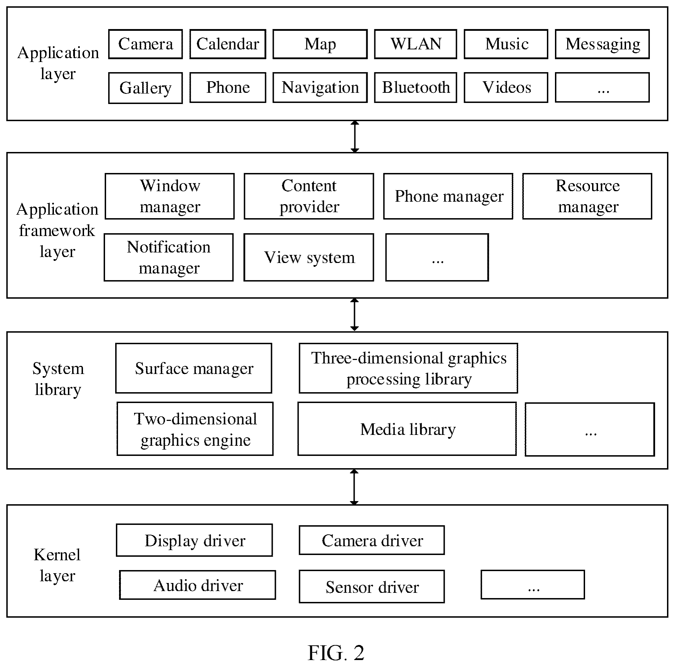

With reference to FIG. 2, the following describes a software structure of the device 100 by using the Android^{®} system with the layered architecture as an example.

FIG. 2 is a block diagram of a software structure of a device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, a system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Videos, and Messaging.

The application framework layer provides an application programming interface (application programming interface, API) and a programming framework for the applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying a picture. The view system may be configured to construct an application. A display interface may include one or more views. For example, a display interface including a short message service message notification icon may include a view for displaying text and a view for displaying a picture.

The phone manager is configured to provide a communication function for the device 100, for example, management of a call status (including answering, declining, or the like).

The resource manager provides various resources such as a localized character string, an icon, a picture, a layout file, and a video file to an application.

The notification manager enables an application to display notification information in the status bar, may be configured to convey a notification message, and may automatically disappear after a short pause without requiring user interaction. For example, the notification manager is configured to: notify download completion, provide a message notification, and the like. The notification manager may alternatively be a notification that appears in the status bar at the top of the system in a form of a graph or scroll bar text, for example, a notification for an application running in background, or a notification that appear on a screen in a form of a dialog window. For example, text information is prompted in the status bar, an alert tone is made, the device vibrates, or an indicator blinks.

The application layer and the application framework layer run on a virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, and MP3.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

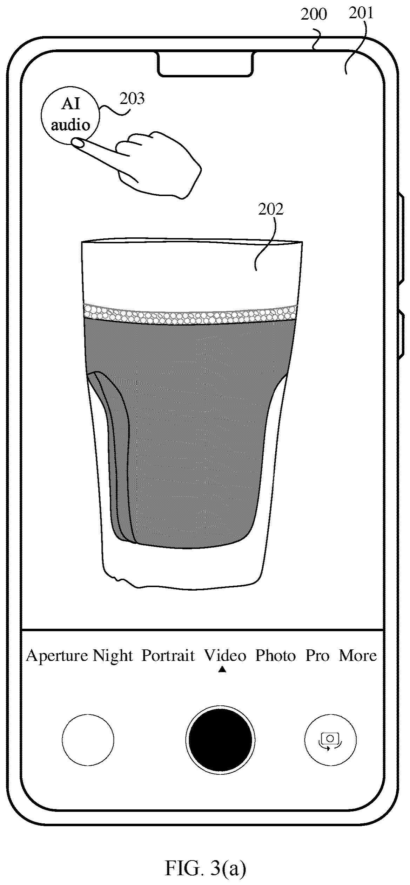

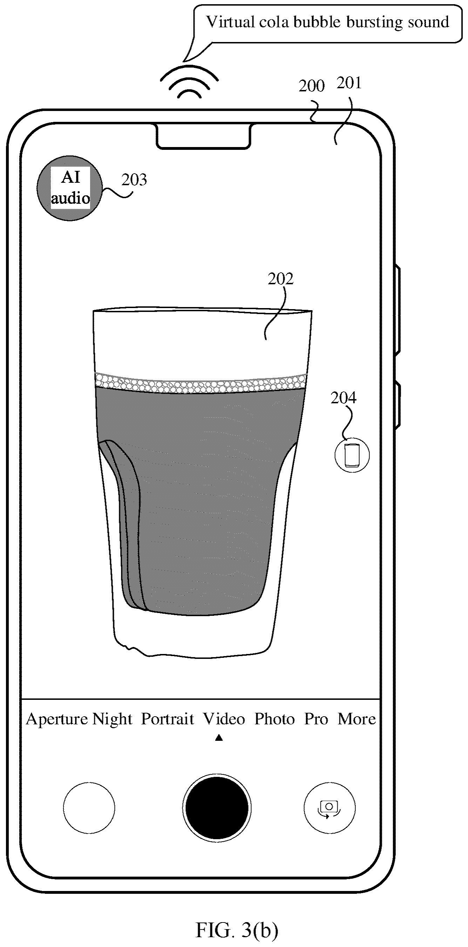

For example, FIG. 3(a) and FIG. 3(b) show a group of graphical user interfaces (graphical user interfaces, GUIs) of an example mobile phone according to an embodiment of this application.

As shown in FIG. 3(a), the mobile phone displays a preview interface 200 of a recorded video. The preview interface 200 may include a viewfinder frame 201. In a preview state, a preview video may be displayed in the viewfinder frame 201 in real time. The preview video includes an object. In some embodiments, as shown in FIG. 3(a), the object is a cup 202 filled with cola. Optionally, the preview interface 200 may further include an (artificial intelligence recording (AI AUDIO)) control 203.

It may be understood that as shown in FIG. 3(a), the preview interface 200 further includes a photo mode, a pro mode, a more mode, and the like.

If intensity of a cola bubble bursting sound is less than an intensity value of background noise that can be obtained by the mobile phone, the mobile phone usually cannot pick up the cola bubble bursting sound. Alternatively, in addition to the cola bubble bursting sound, the mobile phone further picks up a sound of a surrounding environment. Therefore, a signal-to-noise ratio of an overall sound (the cola bubble bursting sound and the sound of the surrounding environment) picked up by the mobile phone is less than a second threshold. Consequently, a user cannot hear the cola bubble bursting sound in the preview video. In this case, if the user wants to hear the cola bubble bursting sound in the preview video, the user may tap the control 203 to enter an artificial intelligence recording mode. For descriptions of the second threshold, refer to the following corresponding descriptions in S710. Details are not described herein again.

In some embodiments, after the mobile phone detects that the user taps the control 203, the mobile phone recognizes a scene of the preview video, and determines that the scene of the preview video is a preset cola bubble bursting scene, and the mobile phone enters a recording mode corresponding to the cola bubble bursting scene. Then, when recognizing cola bubble bursting, the mobile phone plays a preset virtual cola bubble bursting sound in real time, as shown in FIG. 3(b).

In some other embodiments, after the mobile phone detects that the user taps the control 203, a plurality of virtual sound effect recording scene controls may be further displayed in the preview interface 200, so that the user selects a target virtual sound effect recording scene required by the user from the plurality of virtual sound effect recording scene controls. In this way, after the mobile phone detects that the user taps a target virtual sound effect recording scene control, the mobile phone enters a recording mode corresponding to the target virtual sound effect recording scene. Then, the mobile phone plays, in real time, a preset virtual sound corresponding to the target virtual sound effect recording scene.

Optionally, in this case, prompt information may be further displayed in the preview interface 200 of the mobile phone, to prompt the mobile phone to enter the recording mode corresponding to the cola bubble bursting scene. For example, as shown in FIG. 3(b), the preview interface 200 may further include an icon 204, and the icon 204 indicates the mobile phone to enter the recording mode corresponding to the cola bubble bursting scene.

Optionally, the mobile phone may further automatically adjust, based on a distance between a target object in the preview video and the mobile phone, a focal length of the mobile phone, or a proportion of a target object (relative to a screen of the mobile phone) in the preview video, volume (loudness) of the virtual cola bubble bursting sound played in real time. The target object includes cola/bubble.

For example, a shorter distance between the cola/bubble and the mobile phone indicates a louder played virtual cola bubble bursting sound, a larger focal length of the mobile phone indicates a louder played virtual cola bubble bursting sound, and a larger proportion of the cola/bubble indicates a louder played virtual cola bubble bursting sound.

After the mobile phone enters the recording mode corresponding to the cola bubble bursting scene, in a video recording process, if cola bubble bursting is recognized, the mobile phone may also play the preset virtual cola bubble bursting sound in real time. In addition, the mobile phone may also automatically adjust, based on a distance between the cola/bubble in a recorded video and the mobile phone, the focal length of the mobile phone, or a proportion of the cola/bubble (relative to the screen of the mobile phone) in a recorded video, volume (loudness) of the virtual cola bubble bursting sound played in real time. For a specific adjustment solution, refer to the foregoing descriptions. Details are not described herein again.

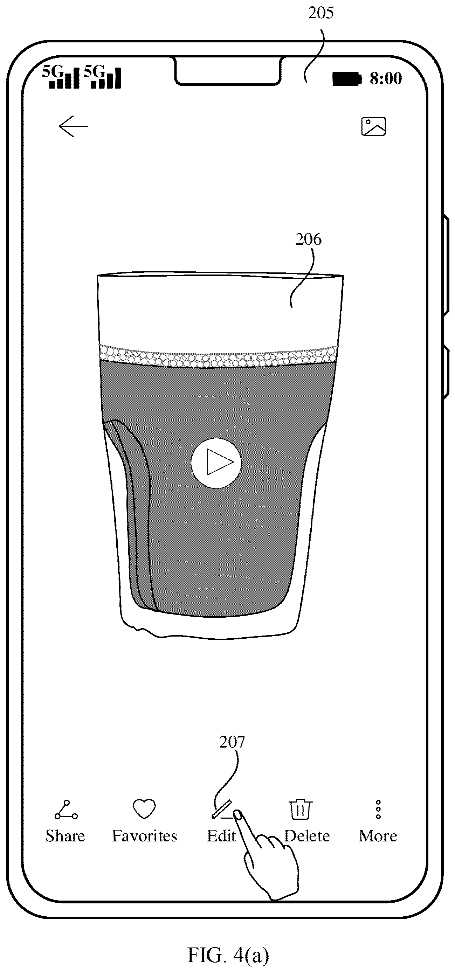

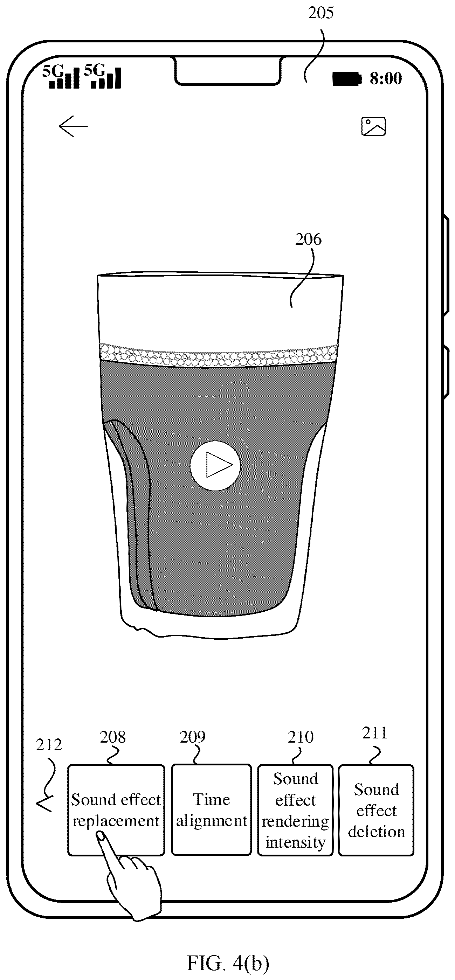

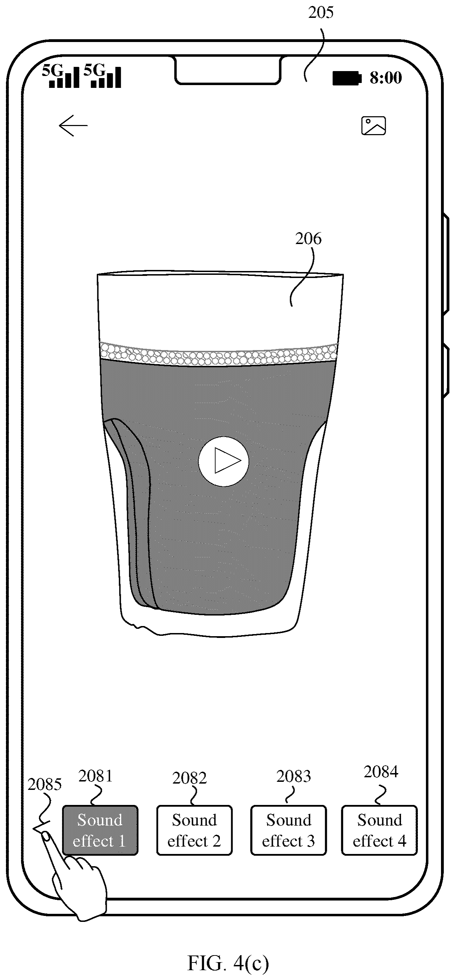

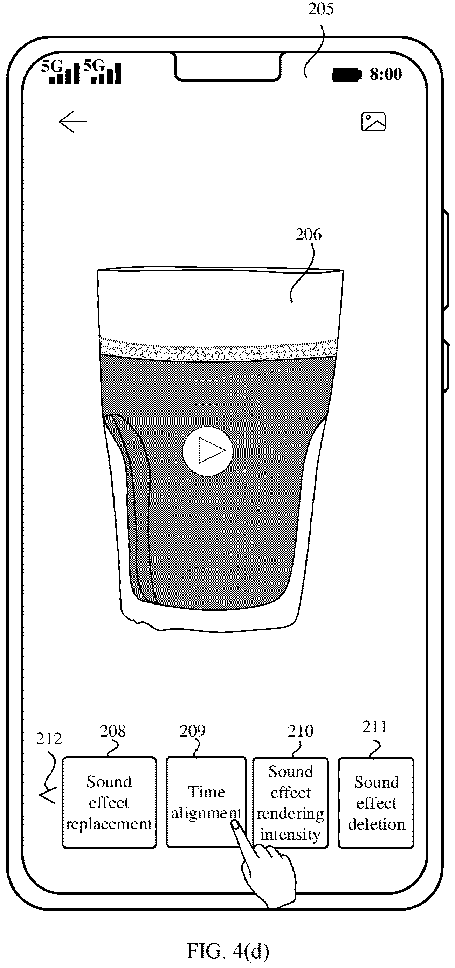

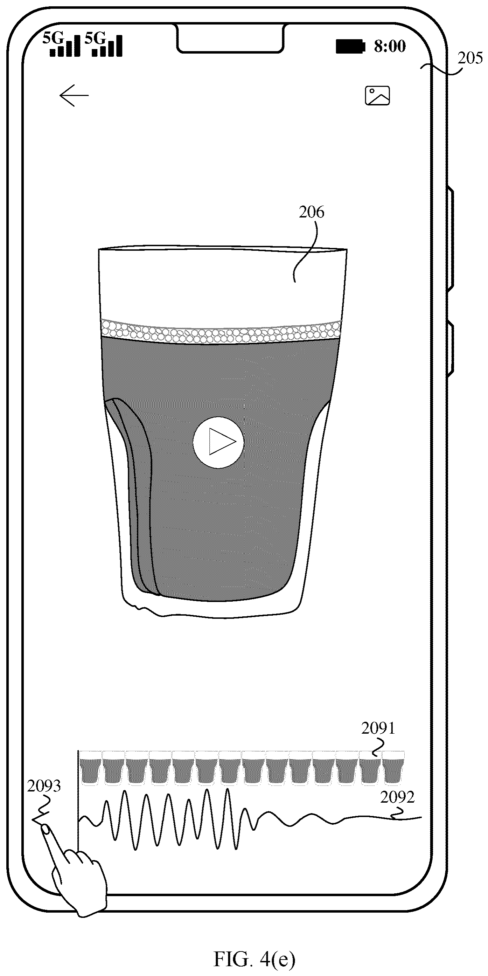

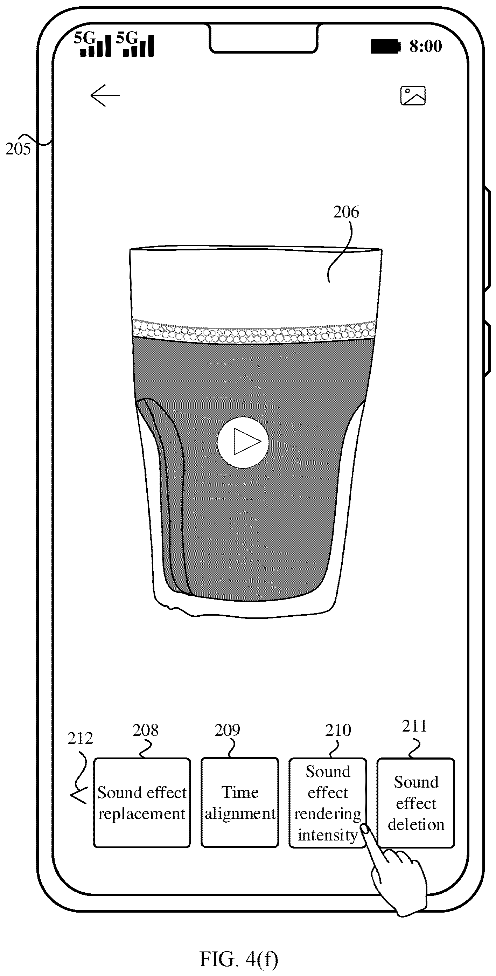

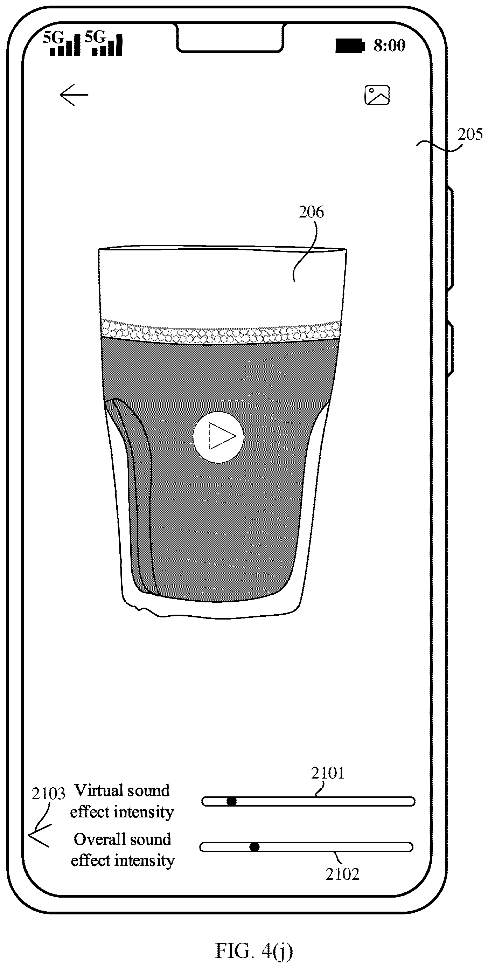

After video recording is completed, if the user is dissatisfied with the virtual cola bubble bursting sound added to the recorded video, the user may further set the virtual cola bubble bursting sound added to the recorded video, which is described below with reference to FIG. 4(a), FIG. 4(b), FIG. 4(c), FIG. 4(d), FIG. 4(e), FIG. 4(f), and FIG. 4(j).

For example, FIG. 4(a), FIG. 4(b), FIG. 4(c), FIG. 4(d), FIG. 4(e), FIG. 4(f), and FIG. 4(j) show another group of GUIs of an example mobile phone according to an embodiment of this application.

As shown in FIG. 4(a), the mobile phone displays an interface 205 in which video playing is paused. The interface 205 includes a recorded video 206, and the interface 205 may further include an edit control 207.

Optionally, as shown in FIG. 4(a), the interface 205 may further include a share control, a favorites control, a delete control, a more control, and the like.

When a user wants to edit the video 206, the user may tap the edit control 207. In this way, after the mobile phone detects that the user taps the edit control 207, as shown in FIG. 4(b), the mobile phone further displays, in the interface 205, a sound effect replacement control 208, a time alignment control 209, a sound effect rendering intensity control 210, a sound effect deletion control 211, and a control 212 for returning to a previous level.

It should be noted that the sound effect replacement control 208, the time alignment control 209, the sound effect rendering intensity control 210, or the sound effect deletion control 211 in this application is a control for editing a specific sound effect corresponding to the video 206. For example, the specific sound effect may include a virtual sound effect.

In addition, sound effect replacement may be understood as replacement of all sounds in the video 206. Alternatively, sound effect replacement may be understood as replacement of some sounds in the video 206, for example, replacement of the virtual sound effect in the video 206. Optionally, the replaced virtual sound effect and a virtual sound effect used as a replacement may be virtual sound effects related to a same target object. For example, the replaced virtual sound effect may be a cola bubble bursting sound, and the virtual sound effect used as a replacement may be another cola bubble bursting sound.

Sound effect deletion may be understood as deletion of all the sounds in the video 206, or deletion of some sounds in the video 206, for example, deletion of the virtual sound effect in the video 206.

The time alignment control may be understood as time alignment between all the sounds in the video 206 and the video 206, or time alignment between some sounds in the video 206 and the video 206, for example, time alignment between the virtual sound effect in the video 206 and the video 206.

When the user wants to delete a sound in the video 206, the user may tap the sound effect deletion control 211. In this way, after detecting that the user taps the sound effect deletion control 211, the mobile phone deletes the sound in the video 206.

When the user is dissatisfied with a sound effect in the video 206, and wants to replace the sound effect in the video 206, the user may tap the sound effect replacement control 208. In this way, after the mobile phone detects that the user taps the sound effect replacement control 208, the mobile phone further displays, in the interface 205, a plurality of sound effect controls and a control for returning to a previous level. As shown in FIG. 4(c), the interface 205 may further include a sound effect 1 control 2081, a sound effect 2 control 2082, a sound effect 3 control 2083, a sound effect 4 control 2084, and a control 2085 for returning to a previous level. The user may select a sound effect for the video 206 based on a requirement of the user. For example, as shown in FIG. 4(c), a current sound effect for the video 206 is a sound effect 1.

After setting the sound effect for the video 206, the user may tap the control 2085. In this way, after detecting that the user taps the control 2085, the mobile phone displays a GUI shown in FIG. 4(d). The GUI is the same as the GUI shown in FIG. 4(b). Details are not described herein again.

When the user is dissatisfied with an audio-visual synchronization degree of the video 206, and wants to perform time alignment between the video 206 and the sound in the video 206, the user may tap the time alignment control 209. In this way, after the mobile phone detects that the user taps the time alignment control 209, as shown in FIG. 4(e), the mobile phone further displays, in the interface 205, a time graph 2091 of the video 206, a time graph 2092 of the sound, and a control 2093 for returning to a previous level. The user may perform audio-visual synchronization setting on the video 206 by using the time graph 2092 of the sound based on a requirement of the user. Audio-visual synchronization may be understood as that audio and a video are synchronized in time, and pictures of the audio and the video are coordinated and consistent. For example, the user may change a correspondence between a time of the sound and a time of the video by dragging the time graph 2092 of the sound leftward or rightward, to perform audio-visual synchronization setting on the video 206. Optionally, the user may further perform, by using the time graph 2092 of the sound, another operation such as a splitting operation, a time stretching operation, or splitting and adjustment of a play sequence of audio after splitting on the sound in the video 206.

After performing audio-visual synchronization setting on the video 206, the user may tap the control 2093. In this way, after detecting that the user taps the control 2093, the mobile phone displays a GUI shown in FIG. 4(f). The GUI is the same as the GUI shown in FIG. 4(b). Details are not described herein again.

When the user is dissatisfied with volume of the sound in the video 206, and wants to adjust the volume of the sound in the video 206, the user may tap the sound effect rendering intensity control 210. In this way, after the mobile phone detects that the user taps the sound effect rendering intensity control 210, as shown in FIG. 4(j), the mobile phone further displays an adjustment progress bar 2101 of virtual sound effect intensity and a loudness adjustment progress bar 2102 of overall sound effect intensity in the interface 205.

The virtual sound effect may be understood as an effect of virtual cola bubble bursting audio added to the video 206. An overall sound effect may be understood as an effect of all audio corresponding to the video 206. In an example, all the audio corresponding to the video 206 may include only the added virtual cola bubble bursting audio. In another example, in addition to the added virtual cola bubble bursting audio, all the audio corresponding to the video 206 further includes other audio, for example, ambient audio obtained by the mobile phone in a process of obtaining the video 206.

The user may adjust, by using the adjustment progress bar 2101 of the virtual sound effect intensity based on a requirement of the user, volume of a virtual cola bubble bursting sound added to the video 206. In this way, the mobile phone may adjust an intensity value of the virtual cola bubble bursting sound added to the video 206 to an intensity value in the adjustment progress bar 2101. The user may further adjust volume of an overall sound in the video 206 by using the loudness adjustment progress bar 2102 of the overall sound effect intensity based on a requirement of the user. In this way, the mobile phone may adjust an intensity value of the overall sound in the video 206 to an intensity value in the adjustment progress bar 2102.

Optionally, in some embodiments, the adjustment progress bar 2101 may be replaced with a signal-to-noise ratio adjustment progress bar. In this way, the user may adjust a signal-to-noise ratio of the sound in the video 206 by using the signal-to-noise ratio adjustment progress bar. The signal-to-noise ratio of the sound in the video 206 may be understood as a ratio of intensity of the virtual cola bubble bursting audio to intensity of audio different from the virtual cola bubble bursting audio in all the audio of the video 206.

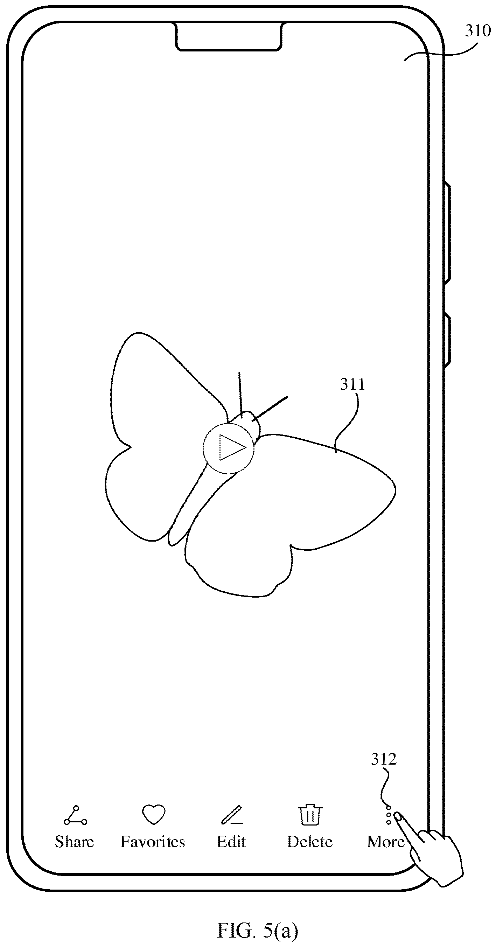

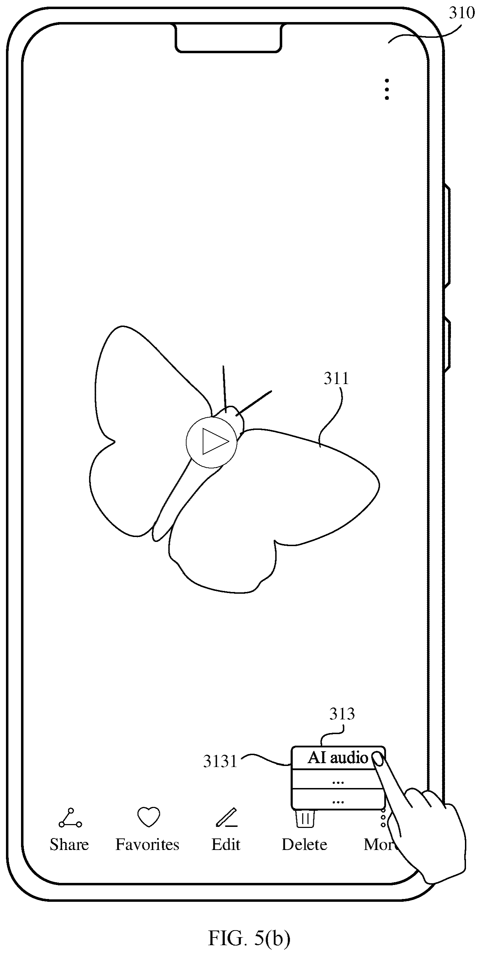

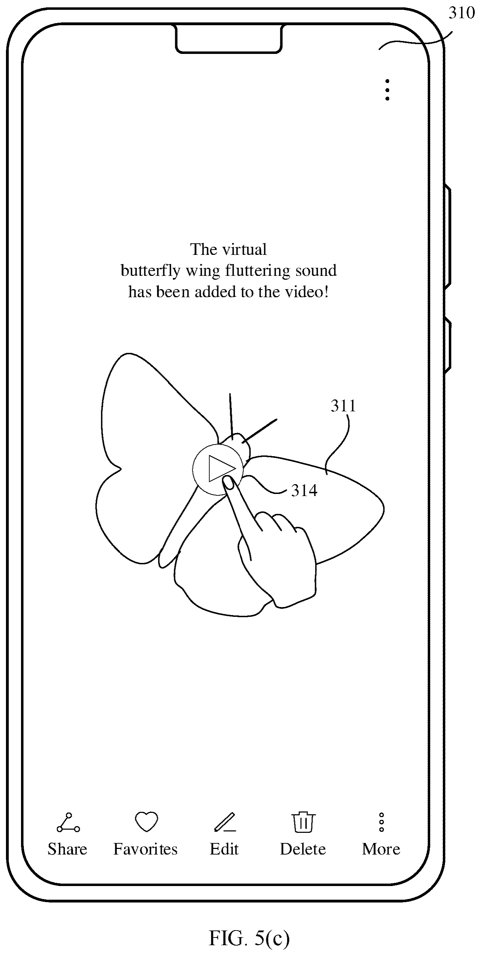

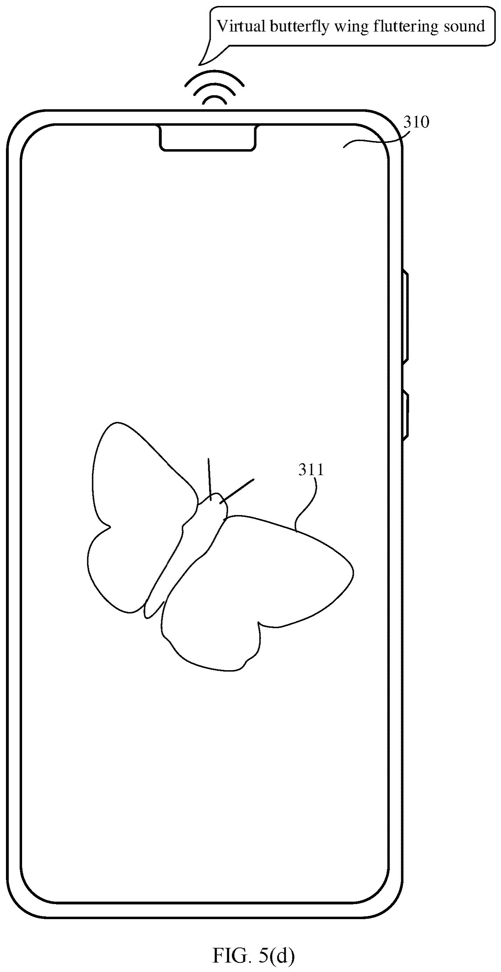

For example, FIG. 5(a), FIG. 5(b), FIG. 5(c), and FIG. 5(d) show still another group of GUIs of an example mobile phone according to an embodiment of this application.

As shown in FIG. 5(a), the mobile phone displays an interface 310 in which video playing is paused. The interface 310 includes a recorded video 311, and the video 311 includes an object. In some embodiments, as shown in FIG. 5(a), the object is a butterfly. Optionally, the interface 310 further includes a more menu bar 312.

If intensity of a butterfly wing fluttering sound in the video 311 is less than an intensity value of background noise that can be obtained by a target device (a device for obtaining the video 311), or in addition to a butterfly wing fluttering sound, there is a sound of a surrounding environment in the video 311, a signal-to-noise ratio of an overall sound (the butterfly wing fluttering sound and the sound of the surrounding environment) in the video 311 is less than a second threshold. Consequently, a user cannot hear the butterfly wing fluttering sound in the video 311. In this case, if the user wants to hear the butterfly wing fluttering sound in the video 311, the user may tap the more menu bar 312.

For descriptions of the second threshold, refer to the following corresponding descriptions in S710. Details are not described herein again. After the mobile phone detects that the user taps the more menu bar 312, a menu option is displayed in the interface 310 of the mobile phone, and the menu option includes at least one option. As shown in FIG. 5(b), the interface 310 of the mobile phone further includes a menu option 313, and the menu option 313 includes an AI audio option 3131.

In some embodiments, after the mobile phone detects that the user taps the AI audio option 3131, the mobile phone recognizes a scene of the video 311 played in the interface 310, and determines that the scene of the video is a preset butterfly wing fluttering scene, and the mobile phone enters a video editing mode corresponding to the butterfly wing fluttering scene. In addition, when butterfly wing fluttering is recognized, a virtual butterfly wing fluttering sound is added to the video 311.

In some other embodiments, after the mobile phone detects that the user taps the AI audio option 3131, a plurality of sound effect processing scene controls may be further displayed in the interface 310, so that the user selects a target sound effect processing scene required by the user from the plurality of sound effect processing controls. In this way, after the mobile phone detects that the user taps a target sound effect processing scene control, the mobile phone enters a video editing mode corresponding to the target sound effect processing scene. Then, the mobile phone plays, in real time, a preset virtual sound corresponding to the target sound effect processing scene.

Optionally, after the mobile phone adds the virtual butterfly wing fluttering sound to the video 311, the mobile phone may further display prompt information, so that the user knows that the virtual butterfly wing fluttering sound has been added to the video. As shown in FIG. 5(c), the prompt information may be text information "The virtual butterfly wing fluttering sound has been added to the video".

Optionally, the mobile phone may further automatically adjust, based on a distance between the butterfly in the video 311 and the mobile phone, a focal length of the mobile phone, or a proportion of the butterfly (relative to a screen of the mobile phone) in the video 311, volume (loudness) of the virtual butterfly wing fluttering sound added to the video.

For example, a shorter distance between the butterfly in the video 311 and the mobile phone indicates a louder played virtual butterfly wing fluttering sound, a larger focal length of the mobile phone indicates a louder played virtual butterfly wing fluttering sound, and a larger proportion of the butterfly in the video 311 indicates a larger played virtual butterfly wing fluttering sound.

When the user wants to view the virtual butterfly wing fluttering sound added to the video, the user may tap a play control 314 shown in FIG. 5(c). In this way, after the mobile phone detects that the play control 314 is tapped, as shown in FIG. 5(d), the mobile phone plays the video 311 and the virtual butterfly wing fluttering sound that matches the video 311.

When the user is dissatisfied with a sound effect in the video 311 shown in FIG. 5(d), the user may further set the sound effect in the video 311 shown in FIG. 5(d). For a specific setting process, refer to the foregoing process of setting the sound effect in the recorded video in FIG. 4(a), FIG. 4(b), FIG. 4(c), FIG. 4(d), FIG. 4(e), FIG. 4(f), and FIG. 4(j). Details are not described herein again.

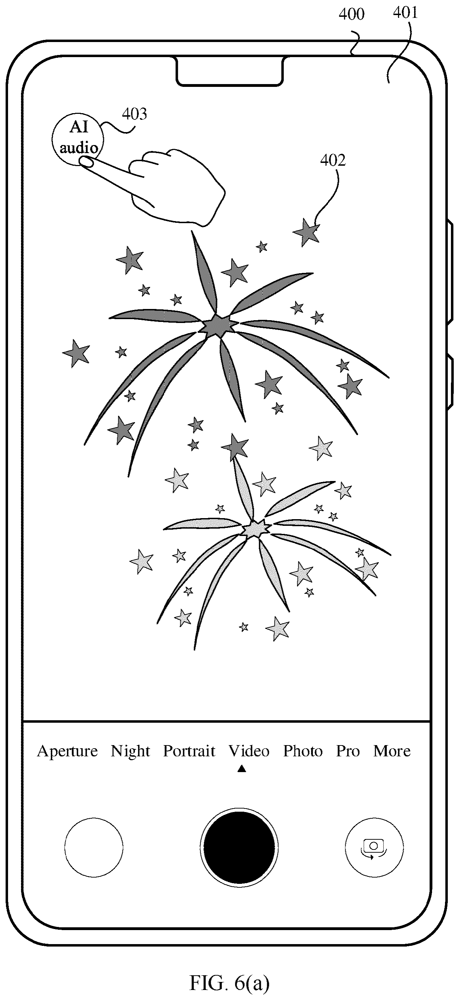

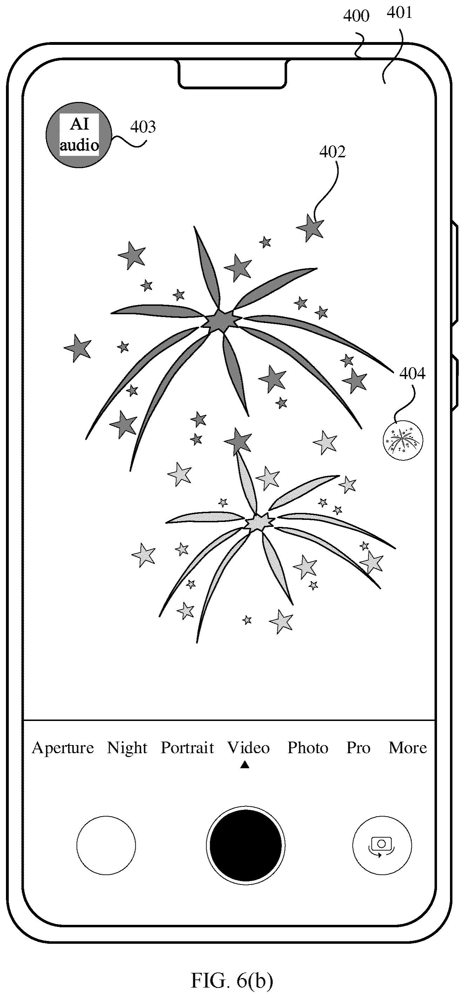

For example, FIG. 6(a) and FIG. 6(b) show still another group of GUIs of an example mobile phone according to an embodiment of this application.

As shown in FIG. 6(a), the mobile phone displays a preview interface 400 of a recorded video. The preview interface 400 may include a viewfinder frame 401. In a preview state, a preview video may be displayed in the viewfinder frame 401 in real time. The preview video includes an object. In some embodiments, as shown in FIG. 6(a), the object is a blooming firework 402. Optionally, the preview interface 400 may further include an (AI AUDIO) control 403.

It may be understood that the preview interface 400 further includes a photo mode, a pro mode, a more mode, and the like.

When an environment around the mobile phone is noisy, a user considers that a sound effect corresponding to a video recorded in the environment is poor, and the user is dissatisfied with a sound corresponding to the video recorded in the environment, the user may tap the control 403 to enter an artificial intelligence recording mode.

In some embodiments, after the mobile phone detects that the user taps the control 403, the mobile phone recognizes a scene of the preview video, and determines that the scene of the preview video is a preset firework blooming scene, and the mobile phone enters a recording mode corresponding to the firework blooming scene. Then, when recognizing firework blooming, the mobile phone increases a signal-to-noise ratio of a sound in the preview video and plays the video in real time.

In some other embodiments, after the mobile phone detects that the user taps the control 403, a plurality of sound effect recording scene controls may be further displayed in the interface 310, so that the user selects a target sound effect recording scene required by the user from the plurality of sound effect recording controls. In this way, after the mobile phone detects that the user taps a target sound effect recording scene control, the mobile phone enters a recording mode corresponding to the target sound effect recording scene. Then, the mobile phone increases a signal-to-noise ratio of a sound in the preview video and plays the video in real time.

Optionally, in this case, prompt information may be further displayed in the preview interface 400 of the mobile phone, to prompt the mobile phone to enter the recording mode corresponding to the firework blooming scene. For example, as shown in FIG. 6(b), the preview interface 401 may further include an icon 404, and the icon 404 indicates the mobile phone to enter the recording mode corresponding to the firework blooming scene.

Optionally, in some embodiments, the mobile phone may further automatically adjust, based on a distance between the firework and the mobile phone, a focal length of the mobile phone, or a proportion of the firework (relative to a screen of the mobile phone), the signal-to-noise ratio of the sound in the preview video played in real time.

For example, a shorter distance between the firework and the mobile phone indicates a larger signal-to-noise ratio of the sound in the played preview video, a larger focal length of the mobile phone indicates a larger signal-to-noise ratio of the sound in the played preview video, and a larger proportion of the firework indicates a larger signal-to-noise ratio of the sound in the played preview video.

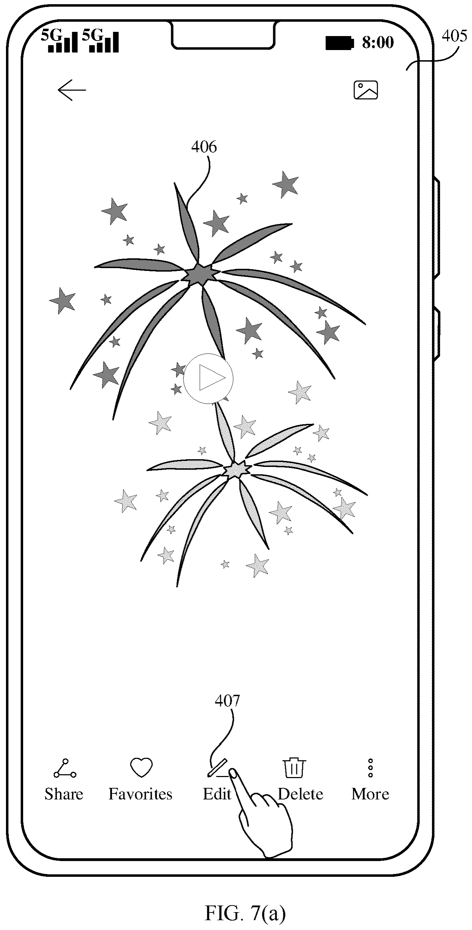

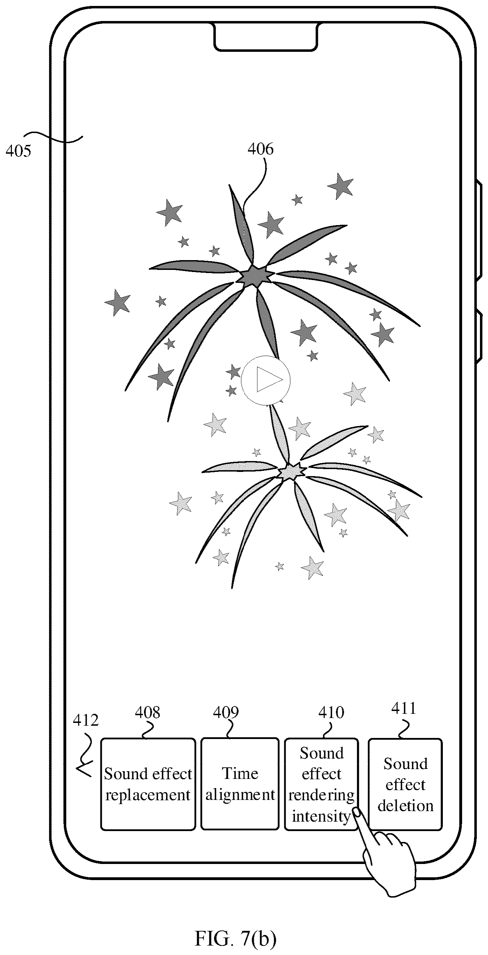

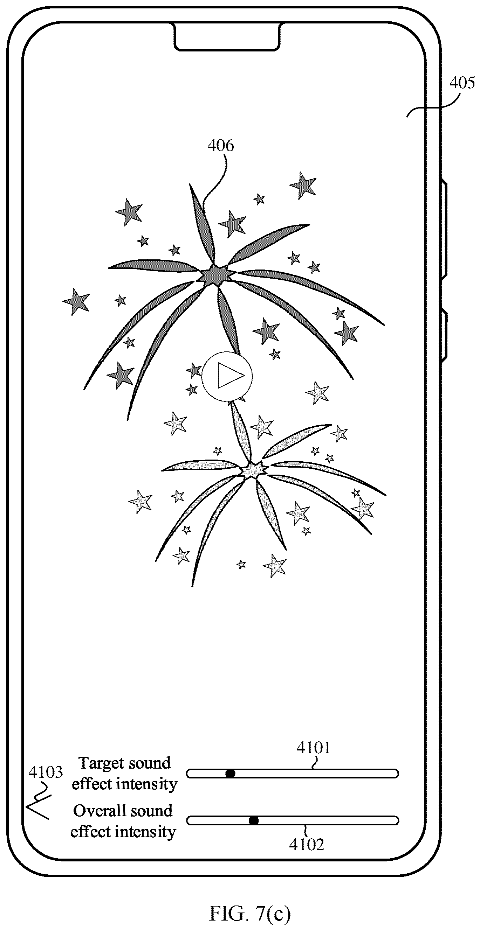

After the mobile phone enters the recording mode corresponding to the firework blooming scene, in a video recording process, the mobile phone may also adjust a signal-to-noise ratio of a sound in a recorded video in real time. In addition, the mobile phone may also automatically adjust, based on a distance between the firework in the recorded video and the mobile phone, the focal length of the mobile phone, or a proportion of the firework (relative to the screen of the mobile phone) in the recorded video, the signal-to-noise ratio of the sound in the recorded video played in real time. For a specific adjustment solution, refer to the foregoing descriptions. Details are not described herein again. When the user is dissatisfied with the firework blooming sound in the recorded video, the user may further set the firework blooming sound in the recorded video, which is described below with reference to FIG. 7(a), FIG. 7(b), and FIG. 7(c).

For example, FIG. 7(a), FIG. 7(b), and FIG. 7(c) show another group of GUIs of an example mobile phone according to an embodiment of this application.

As shown in FIG. 7(a), the mobile phone displays an interface 405 in which video playing is paused. The interface 405 includes a recorded video 406, and the interface 405 may further include an edit control 407.

Optionally, as shown in FIG. 7(a), the interface 405 may further include a share control, a favorites control, a delete control, a more control, and the like.

When a user wants to edit the video 406, the user may tap the edit control 407. In this way, after the mobile phone detects that the user taps the edit control 407, as shown in FIG. 7(b), the mobile phone further displays, in the interface 405, a sound effect replacement control 408, a time alignment control 409, a sound effect rendering intensity control 410, a sound effect deletion control 411, and a control 412 for returning to a previous level.

It should be noted that the sound effect replacement control 408, the time alignment control 409, the sound effect rendering intensity control 410, and the sound effect deletion control 411 in this application are controls for editing a specific sound effect corresponding to the video 406. For example, the specific sound effect may include a target sound effect.

In addition, sound effect replacement may be understood as replacement of all sounds in the video 406. Alternatively, sound effect replacement may be understood as replacement of some sounds in the video 406, for example, replacement of the target sound effect in the video 406. Optionally, the replaced target sound effect and a target sound effect used as a replacement may be sound effects related to a same target object. For example, the replaced target sound effect may be a firework blooming sound, and the virtual sound effect used as a replacement may be another firework blooming sound.

Sound effect deletion may be understood as deletion of all the sounds in the video 406, or deletion of some sounds in the video 406, for example, deletion of the target sound effect in the video 406.

The time alignment control may be understood as time alignment between all the sounds in the video 406 and the video 406, or time alignment between some sounds in the video 406 and the video 406, for example, time alignment between the target sound effect in the video 406 and the video 406.

When the user wants to delete a sound in the video 406, the user may tap the sound effect deletion control 411. In this way, after detecting that the user taps the sound effect deletion control 411, the mobile phone deletes the sound in the video 406.

When the user is dissatisfied with volume of the sound in the video 406, and wants to adjust the volume of the sound in the video 406, the user may tap the sound effect rendering intensity control 410. In this way, after the mobile phone detects that the user taps the sound effect rendering intensity control 410, as shown in FIG. 7(c), the mobile phone further displays an adjustment progress bar 4101 of target sound effect intensity and an adjustment progress bar 4102 of overall sound effect intensity in the interface 405.

The target sound effect may be understood as an effect of firework blooming audio in the video 406. An overall sound effect may be understood as an effect of all audio corresponding to the video 406. For example, in addition to target audio (the firework blooming audio), all the audio corresponding to the video 406 further includes other audio, for example, ambient audio obtained by the mobile phone in a process of obtaining the video 406.

The user may adjust the firework blooming audio in the video 406 by using the adjustment progress bar 4101 of the target sound effect intensity based on a requirement of the user. In this way, the mobile phone may adjust the firework blooming audio in the video 406 to an intensity value in the adjustment progress bar 4101. The user may further adjust volume of an overall sound in the video 406 by using the loudness adjustment progress bar 4102 of the overall sound effect intensity based on a requirement of the user. In this way, the mobile phone may adjust an intensity value of the overall sound in the video 406 to an intensity value in the adjustment progress bar 4102.

Optionally, in some embodiments, the adjustment progress bar 4101 may be replaced with a signal-to-noise ratio adjustment progress bar. In this way, the user may adjust a signal-to-noise ratio of the sound in the video 406 by using the signal-to-noise ratio adjustment progress bar. The signal-to-noise ratio of the sound in the video 406 may be understood as a ratio of intensity of the firework blooming audio to intensity of audio different from the firework blooming audio in all the audio of the video 406.

For a solution of sound effect replacement and time alignment of the video 406, refer to the foregoing process of sound effect replacement and time alignment of the video 206 in FIG. 4(a), FIG. 4(b), FIG. 4(c), FIG. 4(d), FIG. 4(e), FIG. 4(f), and FIG. 4(j). Details are not described herein again.

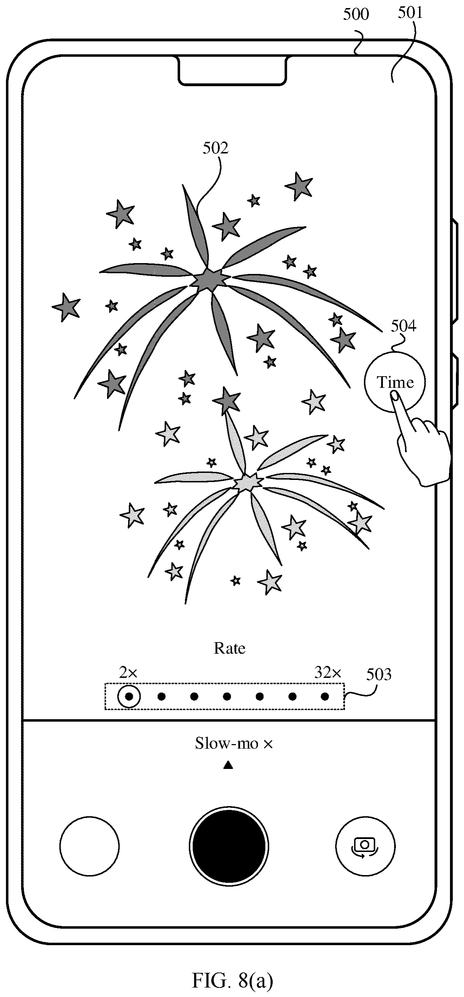

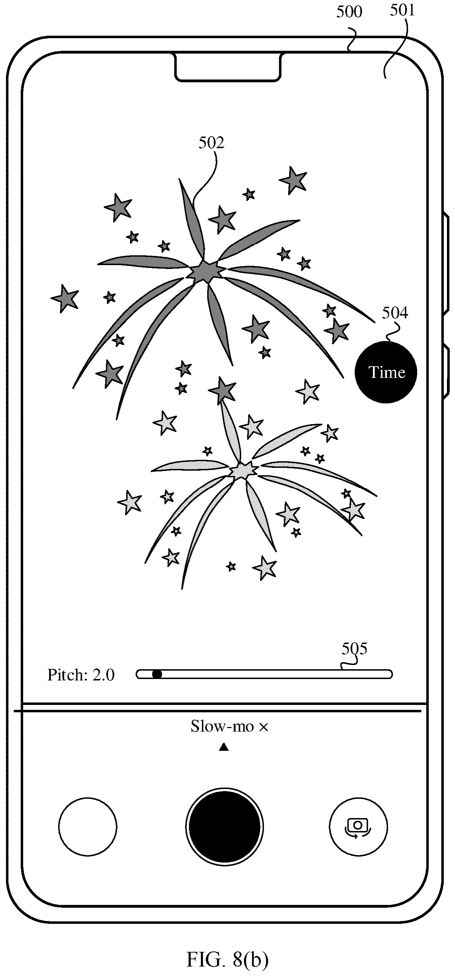

For example, FIG. 8(a) and FIG. 8(b) show a GUI of an example mobile phone according to an embodiment of this application.

As shown in FIG. 8(a), the mobile phone displays a preview interface 500 in a slow-motion recording mode. The preview interface 500 may include a viewfinder frame 501. In a preview state, a preview video may be displayed in the viewfinder frame 501 in real time. As shown in FIG. 8(a), the preview video includes a blooming firework 502.

Optionally, as shown in FIG. 8(a), the preview interface 500 may further display a slowdown rate (or slowdown multiple) icon 503 in the slow-motion recording mode. In this case, a slowdown rate in the slow-motion recording mode is 2×.

It should be understood that the slowdown rate may be understood as a multiple of a play rate of a video recorded in the slow-motion recording mode relative to a play rate of an original video. The original video is a video recorded in a normal recording mode. For example, if the slowdown rate in the slow-motion recording mode is 2×, the play rate of the video recorded in the slow-motion recording mode is twice the play rate of the original video.

Optionally, a user may further adjust the slowdown rate in the slow-motion recording mode. For example, the user may slide the icon 503 leftward or rightward in the preview interface 500 to adjust a slowdown rate value, so as to adjust the slowdown rate in the slow-motion recording mode.

In this case, the mobile phone may further display prompt information, to prompt the user with a manner of processing audio corresponding to the video in the slow-motion recording mode. For example, the manner of processing the audio may include time stretching with pitch preservation processing, time stretching and pitch shifting processing, and pitch shifting with tempo preservation processing.

For example, as shown in FIG. 8(a), the prompt information may be a switch 504. The switch 504 indicates whether the manner of processing the audio in the slow-motion recording mode is time stretching with pitch preservation processing. For example, when the switch 504 is in an on state (or a state of being turned on), the mobile phone processes the audio in the time stretching with pitch preservation manner in the slow-motion recording mode. When the switch 504 is in an off state (or a state of being turned off), the mobile phone processes the audio in a normal processing manner (for example, the time stretching and pitch shifting processing manner) in the slow-motion recording mode.

It should be understood that the foregoing manners of processing the audio when the switch 504 is in the on state and the off state are merely examples, and shall not constitute a limitation on this application. In addition, an example in which the switch 504 is in the off state is used in FIG. 8(a), and shall not constitute a limitation on this application.

In this case, when the user wants to process the audio in the time stretching with pitch preservation manner, the user may tap the switch 504. In this way, after detecting an operation of tapping the switch 504, the mobile phone may process the audio in the time stretching with pitch preservation manner in the slow-motion recording mode.

Optionally, in some embodiments, the user may further set a separate manner of processing pitch of the audio in the slow-motion recording mode.

For example, after the mobile phone detects an operation of touching and holding the switch 504 by the user, as shown in FIG. 8(b), the mobile phone may further display a pitch adjustment bar 505 in the preview interface 500. The user may adjust, by using the pitch adjustment bar 505 based on a requirement of the user, the pitch of the audio in the video recorded in the slow-motion recording mode. In this way, the mobile phone records the video in the slow-motion recording mode based on an adjustment multiple in the pitch adjustment bar 505.

It should be understood that the pitch adjustment bar 505 displays a pitch adjustment multiple, namely, an adjustment multiple of pitch of the video recorded in the slow-motion recording mode relative to pitch of original audio. The original audio is audio corresponding to the original video recorded in the normal recording mode. As shown in FIG. 8(b), the pitch adjustment multiple in the slow-motion recording mode is 2×. In this case, the pitch of the video recorded in the slow-motion recording mode is twice the pitch of the original audio.

It should be noted that the pitch adjustment multiple may be understood as an adjustment multiple of pitch of all audio corresponding to the video. When all the audio includes real audio (a real sound generated by an object), an adjustment multiple of pitch of the real audio is an adjustment multiple relative to pitch of the real audio in the original audio. When all the audio includes virtual audio, an adjustment multiple of pitch of the virtual audio is an adjustment multiple relative to pitch of original virtual audio. The pitch of the original virtual audio is not pitch of the virtual audio in the original audio, but is audio that matches a motion rule of a target object in the original video.

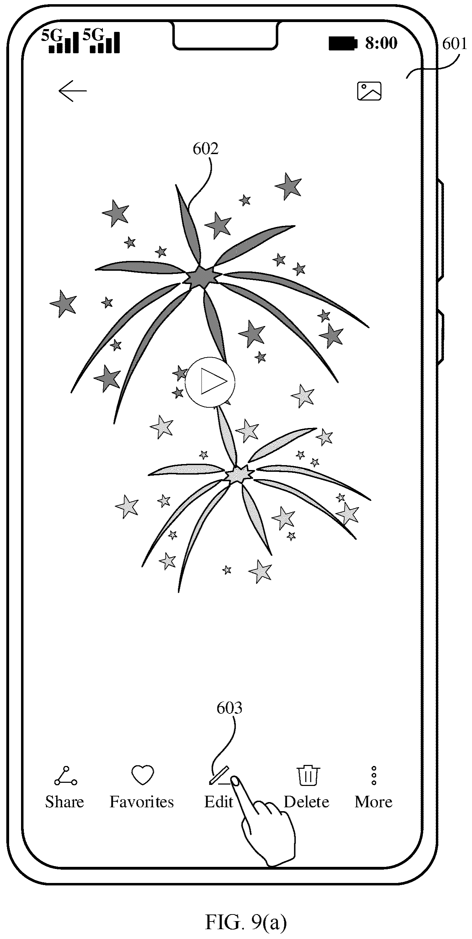

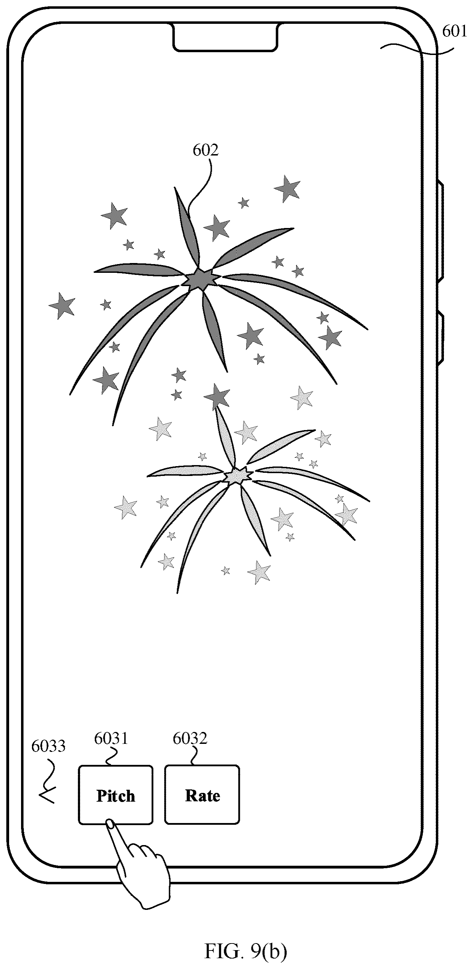

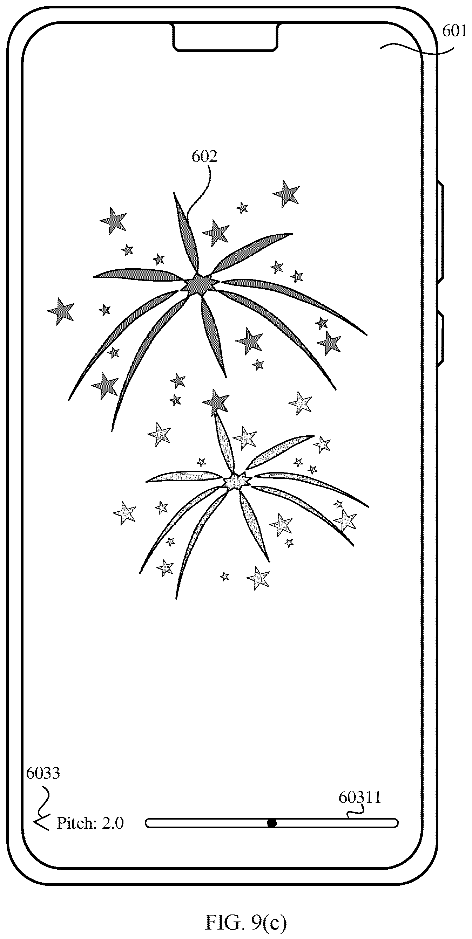

For example, FIG. 9(a), FIG. 9(b), and FIG. 9(c) show a GUI of an example mobile phone according to an embodiment of this application.

As shown in FIG. 9(a), the mobile phone displays an interface 601 in which video playing is paused. The interface 601 includes a recorded video 602, and the interface 601 may further include an edit control 603. The video 602 is a video recorded in a slow-motion recording mode/fast-motion recording mode.

Optionally, as shown in FIG. 9(a), the interface 601 may further include a share control, a favorites control, a delete control, a more control, and the like.

When a user wants to edit the video 602, the user may tap the edit control 603. In this way, after the mobile phone detects that the user taps the edit control 603, as shown in FIG. 9(b), the mobile phone further displays, in the interface 601, a pitch control 6031, a rate control 6032, and a control 6033 for returning to a previous level.

When the user wants to process pitch of the video 602, the user may tap the pitch control 6031. In this way, after detecting an operation of tapping the pitch control 6031, the mobile phone displays a pitch adjustment bar 60311 in the interface 601, as shown in FIG. 9(c).

Optionally, in some embodiments, the pitch adjustment bar 60311 displays a pitch adjustment multiple, namely, an adjustment multiple relative to pitch of original audio. As shown in FIG. 9(c), the adjustment multiple corresponding to the pitch adjustment bar 60311 is 2.0, that is, pitch of audio of the video 602 is twice the pitch of the original audio.

The user may adjust pitch of a sound in the video 602 by using the pitch adjustment bar 60311 based on a requirement of the user. In this way, the mobile phone adjusts the pitch of the audio corresponding to the video 602 based on the adjustment multiple in the pitch adjustment bar 60311.

When the user wants to process play rates of the video 602 and the audio corresponding to the video 602, the user may tap the rate control 6032. In this way, after detecting an operation of tapping the rate control 6032, the mobile phone displays a rate adjustment bar in the interface 601. The user may adjust the play rates of the video 602 and the audio corresponding to the video 602 by using the rate adjustment bar based on a requirement of the user. In this way, the mobile phone adjusts the play rates of the video 602 and the audio corresponding to the video 602 based on the adjustment multiple in the rate adjustment bar. Details are not described herein with reference to the accompanying drawings.

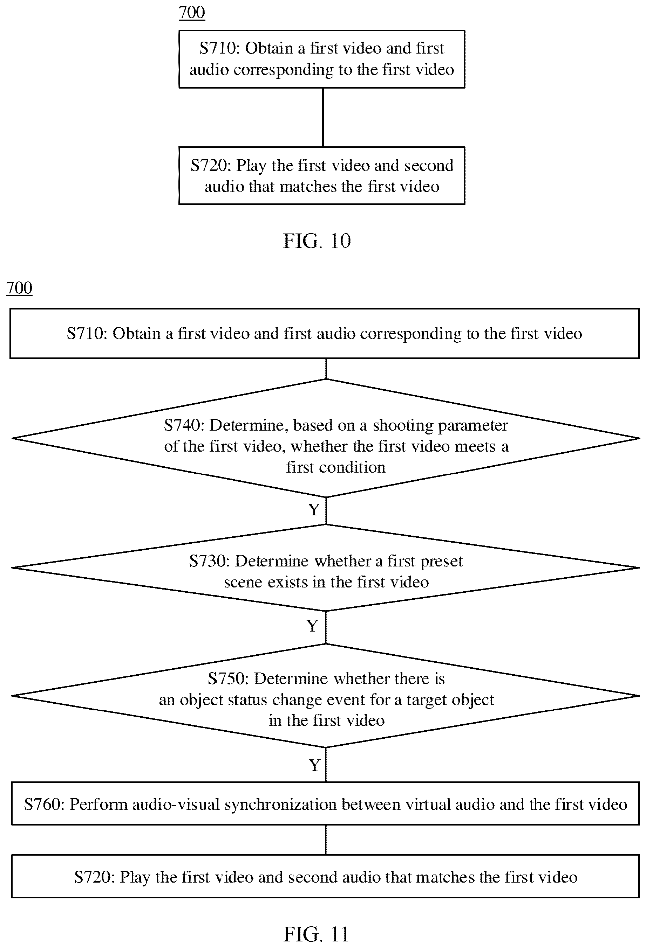

The following describes, with reference to FIG. 10 to FIG. 14, the video playing method provided in embodiments of this application.

The method may be applied to an electronic device. The electronic device may be the electronic device shown in FIG. 1 or FIG. 2, or the electronic device may be the mobile phone shown in FIG. 3(a) and FIG. 3(b) to FIG. 9(a), FIG. 9(b), and FIG. 9(c).

FIG. 10 is a schematic flowchart of an example video playing method 700 according to an embodiment of this application.

As shown in FIG. 10, the method 700 includes S710 and S720. The following describes S710 and S720 in detail.

S710: An electronic device obtains a first video and first audio corresponding to the first video.

The first audio may be understood as original audio of the first video.

In an example, the first audio includes first target audio, and intensity of the first audio is less than a first threshold. In this case, it may be understood that the audio corresponding to the first video includes only the first target audio and includes no ambient audio.

It may be understood that when a target device (which may be an execution body of the method 700, or may be another device) obtains the first video, an object in the first video makes a sound. However, because intensity of the sound made by the object is less than the first threshold, or because a distance between the object and the electronic device is greater than a target distance, a sound of the object picked up by the device within a shooting distance is small (for example, less than the first threshold). Therefore, when the first video and the audio corresponding to the first video are played, a user almost cannot hear the sound of the object. That is, the first target audio is audio that exists in a scene in which the first video is recorded.

For example, the first threshold may be equal to or close to an intensity value of background noise that can be obtained by the target device. For example, if the intensity value of the background noise that can be obtained by the target device is -100 dBV, the first threshold may be equal to or close to -100 dBV.

It should be noted that for different devices, intensity values of background noise that can be obtained by the devices may be the same or may be different. This is not limited in this application.

In another example, the first audio includes first ambient audio and first target audio. A signal-to-noise ratio of the first audio is less than a second threshold. In this case, it may be understood that the audio corresponding to the first video includes ambient audio, but the signal-to-noise ratio of the first audio is small.

It should be noted that in this example, the signal-to-noise ratio of the first audio is less than the second threshold, that is, a ratio of intensity of the first target audio to intensity of the first ambient audio is less than the second threshold. Respective magnitudes of the intensity of the first ambient audio and the intensity of the first target audio are not limited. In addition, when the signal-to-noise ratio is represented by decibel (dB), the signal-to-noise ratio of the first audio may be represented as 10log(A/B) or 20log(A/B), where A is the intensity of the first target audio, and B is the intensity of the first ambient audio.

For example, the second threshold may be obtained based on a large amount of data. For example, the data may include a signal-to-noise ratio of audio in a video recorded when a user actively enables an artificial intelligence recording function in a video recording process. Optionally, the recorded video may be a recorded video in a first preset scene, and/or the recorded video may be a recorded video in a second preset scene. For descriptions of the second preset scene, refer to related descriptions in a method 800. Details are not described herein again.

For example, when the signal-to-noise ratio is represented by decibel, a value range of the second threshold is usually -10 dB to 5 dB. Further, the value range of the second threshold is preferably -5 dB to 0 dB. Further, the second threshold may be -3 dB.

It should be noted that for different devices, values of the second threshold may be the same or may be different. This is not limited in this application.

Both the first target audio and virtual audio described below are audio related to a target object.

The target object is, in a general sense, any object that can produce a sound. In an example, the target object may be a visible object. For example, the target object may be a bubble, an insect, a glacier, a pet, a fish, a snake, a worm, a flower, or grass in Table 1. In another example, the target object may alternatively be an object that can generate a phenomenon in nature, for example, wind that generates a wind sound, or rain that generates a rain sound.

The first target audio is captured real audio generated by the target object.

The virtual audio may also be referred to as a virtual sound effect, and may be audio generated by emulating/simulating/rendering the target object. That is, the virtual audio is audio that does not exist in a scene in which the first video is recorded.

The virtual audio may be the same as or different from the first target audio. This is not limited in this application.

In an example, the virtual audio may be obtained based on a large amount of captured real audio generated by the target object. In another example, the virtual audio may be audio generated by a target object established by a person based on cognition of the person.

One target object may correspond to one or more types of virtual audio. This is not limited in this application.

The first ambient audio may be understood as a sound generated, in a process of recording the first video, by another object that is in an external environment and that is different from an object that generates the first target audio.

A trigger condition for obtaining the first video in S710 is not limited in this embodiment of this application.

In an example, after the electronic device detects an operation of entering a video recording interface, the electronic device obtains the first video. In this case, the trigger condition for obtaining the first video is that the electronic device detects the operation of entering the video recording interface, and the first video may be a preview video.

For example, as shown in FIG. 3(a), after the mobile phone enters the video recording interface 200, the electronic device obtains a preview video (an example of the first video) including a cup 202 filled with cola.

In another example, after the electronic device detects an operation of viewing the first video, the electronic device obtains the first video. In this case, the trigger condition for obtaining the first video is that the electronic device detects the operation of viewing the first video, and the first video may be a recorded video.

For example, as shown in FIG. 5(a), after the mobile phone detects an operation of viewing the recorded video 311 by the user, the electronic device obtains a video 311 (an example of the first video) including a butterfly.

Optionally, in some embodiments, as shown in FIG. 11, between S710 and S720, the method 700 may further include S730. The following describes S730 in detail.

S730: The electronic device determines whether the first preset scene exists in the first video.

Specifically, when determining that the first preset scene exists in the first video, the electronic device performs S720; or when determining that the first preset scene does not exist in the first video, the electronic device does not perform S720.

For example, the user may set the first preset scene based on a requirement of the user. For example, the user may set, as the first preset scene, a scene in which an object (including an animal) in nature that (actively or passively) generates a sound with low intensity is located.

In some embodiments, the first preset scene includes but is not limited to a bubble bursting scene, an insect wing fluttering scene, a glacier melting scene, a pet (for example, hamster) eating scene, a scene of fish swimming in water, a snake crawling scene, a worm wriggling scene, a flower/grass swaying scene, and the like. In this case, the first preset scene is a dynamic preset scene.

For example, the bubble bursting scene may be further classified into a bubble bursting scene of a carbonated drink, a bubble bursting scene of foam, or a bubble bursting scene generated by soaking an effervescent tablet in water.

In some other embodiments, the first preset scene includes but is not limited to a bubble scene, an insect scene, a glacier scene, a pet (for example, hamster) scene, a fish scene, a snake scene, a worm scene, a flower/grass scene, and the like. In this case, the first preset scene is a static preset scene.

When the first preset scene exists in the first video, the target object is related to the first preset scene.

The first target audio/virtual audio is audio related to the target object, and the target object is related to the first preset scene. In this way, the first target audio may be understood as captured real audio generated by the target object in the first preset scene, and the virtual audio may be understood as audio generated by emulating/simulating/rendering the target object in the first preset scene.

In a first preset scene, one target object may correspond to one type of virtual audio.

For example, a trigger condition for S730 may be that the electronic device responds to a first operation performed on a first control in a first interface. That is, after the first operation performed by the user on the first control is detected in the first interface, it is determined whether the first preset scene exists in the first video. The first interface is an interface for obtaining the first video.

For example, as shown in FIG. 3(a), the first interface is the preview interface 200, the first control is the AI audio control 203, and the first operation is a tap operation.

For another example, as shown in FIG. 5(c), the first interface is the interface 310, the first control is the AI audio option 3131, and the first operation is a tap operation.

For example, S730 specifically includes: determining, based on content of the first video, whether the first preset scene exists in the first video.

For example, the electronic device may include a first preset scene determining model. The electronic device inputs the first video into the first preset scene determining model. If the first preset scene exists in the first video, the first preset scene determining model outputs a result indicating that the first preset scene exists in the first video. If the first preset scene does not exist in the first video, the first preset scene determining model outputs a result indicating that the first preset scene does not exist in the first video. The first preset scene determining model is a model established based on the first preset scene.

Optionally, after S730, if the first video is a preview video or a video being recorded, the electronic device may further enter a shooting mode corresponding to the first preset scene.

Optionally, the electronic device may further display first prompt information in an interface for displaying the first video. The first prompt information is used to prompt entry into a recording mode corresponding to the first preset scene.

For example, as shown in FIG. 3(b), the first prompt information may be the icon 204.

Optionally, as shown in FIG. 11, between S710 and S730, the method 700 may further include S740. The following describes S740 in detail.

S740: The electronic device determines, based on a shooting parameter of the first video, whether the first video meets a first condition.

Specifically, when it is determined that the first video meets the first condition, S730 and steps after S730 are performed; or when it is determined that the first video does not meet the first condition, execution of S730 and steps after S730 is ended.

If there are a plurality of first preset scenes in a preset scene library, for each first preset scene, the electronic device needs to perform S730. In this case, if S740 is performed before S730, and it is determined, in S740, that the first video meets the first condition, the electronic device considers that there is a high probability that the first preset scene exists in the first video. In this way, the electronic device can increase a frequency of performing S730, thereby reducing power consumption of the electronic device. If S740 is performed before S730, and it is determined, in S740, that the first video does not meet the first condition, the electronic device considers that there is a high probability that the first preset scene does not exist in the first video. In this case, the electronic device still performs S730 at a normal frequency.

For example, if the electronic device does not perform S740 before performing S730, to determine detection accuracy of S730, the electronic device performs S730 at a low frequency, for example, performs S730 five times per second. If the electronic device performs S740 before performing S730, and determines, in S740, that the first video meets the first condition, the electronic device considers that there is a high probability that the first preset scene exists in the first video. In this case, the electronic device may increase a frequency of performing S730, and makes a change from performing S730 five times per second to performing S730 10 times per second. If the electronic device performs S740 before performing S730, and determines, in S740, that the first video does not meet the first condition, the electronic device considers that there is a high probability that the first preset scene does not exist in the first video. In this case, the electronic device still performs S730 at a normal frequency, that is, performs S730 five times per second.

For example, the shooting parameter may include a shooting focal length, a shooting range, and a proportion of an object.

The object may be understood as any object in the first video. For example, the object may be a cup, a bubble, cola, an insect, a glacier, a pet, a fish, a snake, a worm, a flower, grass, a blue sky, a white cloud, or a building.

When the shooting parameter includes the recording focal length, the first condition includes that the recording focal length of the first video becomes smaller. In this way, S740 includes that when it is determined that the recording focal length of the first video becomes smaller, it is determined that the first video meets the first condition. In this case, it may be considered that in a process of obtaining the first video, a shooting picture is zoomed in, to capture a distant object more clearly.

For example, if a device for obtaining the first video is the execution body of the method 700, namely, the electronic device, and the first video is a preview video or a video being recorded, it may be determined, by using a focal length change of a camera on the electronic device, whether the recording focal length of the first video becomes smaller.

When the shooting parameter includes the shooting range, the first condition includes that the shooting range of the first video changes. In this way, S740 includes that when it is determined that the shooting range of the first video changes, it is determined that the first video meets the first condition. In this case, it may be considered that in a process of obtaining the first video, the shooting range is adjusted to capture a desired shooting scene.

For example, if a device for obtaining the first video is the execution body of the method 700, namely, the electronic device, and the first video is a preview video or a video being recorded, it may be determined, by using a sensor (for example, a gyroscope sensor) on the electronic device, whether a posture (for example, whether there is a rotation or pitch posture) of the electronic device changes, so as to determine whether the shooting range of the first video changes.

When the shooting parameter includes the proportion of the object, the first condition includes that the proportion of the object is greater than or equal to a third threshold. In this way, S740 includes that when the proportion of the object is greater than or equal to the third threshold, it is determined that the first video meets the first condition.

A specific value of the third threshold is not limited in this embodiment of this application. For example, the third threshold may be greater than or equal to 10%.

Optionally, as shown in FIG. 11, after S710, the method 700 may further include S750. An execution sequence of S750 and S730 is not limited in this application. The following describes S750 in detail.

S750: The electronic device determines whether there is an object status change event for the target object in the first video.

Specifically, when it is determined that there is an object status change event for the target object in the first video, steps after S750 are performed; or when it is determined that there is no object status change event for the target object in the first video, execution of steps after S750 is ended.

For example, statuses of a same object in a plurality of image frames in the first video may be compared, to determine whether there is an object status change event for the target object in the first video.

For example, if the first preset scene is a bubble bursting scene, when it is determined, through comparison, that a same bubble in the plurality of image frames in the first video bursts, it may be considered that there is an object status change event for the bubble in the first video.

For another example, if the first preset scene is an insect scene, when it is determined, through comparison, that wings of an insect in the plurality of image frames in the first video flutter, it may be considered that there is an object status change event for the insect in the first video.

The target object is related to the first preset scene.

For example, an example between the first preset scene and the target object is shown in Table 1.

**Table 1**

| First preset scene | Target object |
|---|---|
| Bubble bursting scene | Bubble |
| Bubble scene | |
| Insect wing fluttering scene | Insect |
| Insect scene | |
| Glacier melting scene | Glacier |
| Glacier scene | |
| Pet eating scene | Pet |
| Pet scene | |
| Scene of fish swimming in water | Fish |
| Fish scene | |
| Snake crawling scene | Snake |
| Snake scene | |
| Worm wriggling scene | Worm |
| Worm scene | |
| Flower/Grass swaying scene | Flower/Grass |

Optionally, in some embodiments, as shown in FIG. 11, after S750, the method 700 further includes S760: The electronic device performs audio-visual synchronization between the virtual audio and the first video.

For example, performing audio-visual synchronization between the virtual audio and the first video may be understood as follows: In a process of playing the first video, when a status of the target object in the first video changes, the virtual audio is synchronously played. For example, a frequency of playing the virtual audio is the same as a quantity of times the status of the target object in the first video changes.

In an example, if the first video is a preview video or a video being recorded, S760 includes: The electronic device predicts the status of the target object in the first video based on the first video, and obtains a first status change time of the target object; and plays the virtual audio in the first status change time.

For example, if the first preset scene is a bubble bursting scene or a bubble scene, a status of the bubble may be predicted, and virtual audio corresponding to bubble bursting may be played in a predicted bubble bursting time. In this way, each time the bubble bursts, the virtual audio corresponding to bubble bursting is played.

For another example, if the first preset scene is an insect wing fluttering scene or an insect scene, a status of the insect may be predicted, and virtual audio corresponding to insect wing fluttering may be played in a predicted insect wing fluttering time. In this way, each time wings of the insect flutter, the virtual audio corresponding to insect wing fluttering is played.

In another example, if the first video is a recorded video, S760 includes: The electronic device determines a second status change time of the target object in the first video based on the first video; and plays the virtual audio in the second status change time.

For example, if the first preset scene is a bubble bursting scene or a bubble scene, virtual audio corresponding to bubble bursting may be played in a bubble bursting time. In this way, each time the bubble bursts, the virtual audio corresponding to bubble bursting is played.

For another example, if the first preset scene is an insect wing fluttering scene or an insect scene, virtual audio corresponding to insect wing fluttering may be played in an insect wing fluttering time. In this way, each time wings of the insect flutter, the virtual audio corresponding to insect wing fluttering is played.

It should be noted that there may be one or more first status change times or second status change times. This is not limited in this application.

S720: The electronic device plays the first video and second audio that matches the first video.

When the first audio includes the first target audio, the second audio includes the virtual audio. In this case, intensity of the virtual audio is greater than or equal to the first threshold.

Optionally, in some embodiments, in addition to the virtual audio, the second audio may further include the first target audio, and intensity of the first target audio is less than the first threshold.

When the second audio includes the virtual audio, the virtual audio related to the first preset scene may be added, and the virtual audio related to the first preset scene, namely, the second audio, may be used as audio of the first video and played.

When the second audio includes the virtual audio and the first target audio, the virtual audio related to the first preset scene may be added on the basis of the first target audio, and the first target audio and the virtual audio related to the first preset scene, namely, the second audio, may be used as audio of the first video and played.

When the first audio includes the first ambient audio and the first target audio, the second audio includes the first ambient audio and the virtual audio. In this case, loudness of the virtual audio is greater than or equal to the second threshold.

Optionally, in some embodiments, in addition to the first ambient audio and the virtual audio, the second audio may further include the first target audio.

When the second audio includes the first ambient audio and the virtual audio, the virtual audio related to the first preset scene may be added on the basis of the first ambient audio, and the first ambient audio and the virtual audio related to the first preset scene, namely, the second audio, may be used as audio of the first video and played.

When the second audio includes the first ambient audio, the virtual audio, and the first target audio, the virtual audio related to the first preset scene may be added on the basis of the first ambient audio and the first target audio, and the first ambient audio, the first target audio, and the virtual audio related to the first preset scene, namely, the second audio, may be used as audio of the first video and played.

It should be noted that because the virtual audio is audio that does not exist in the scene in which the first video is recorded, the virtual audio is audio additionally added to the audio of the first video.

For example, an example between the first preset scene and the first target audio/virtual audio is shown in Table 2.

**Table 2**

| First preset scene | First target audio/Virtual audio |
|---|---|
| Bubble bursting scene | Bubble bursting sound |
| Bubble scene | |
| Insect wing fluttering scene | Insect wing fluttering sound |
| Insect scene | |
| Glacier melting scene | Glacier melting sound |
| Glacier scene | |
| Pet eating scene | Pet eating sound |
| Pet scene | |
| Scene of fish swimming in water | Sound of fish swimming in water |
| Fish scene | |
| Snake crawling scene | Snake crawling sound |
| Snake scene | |
| Worm wriggling scene | Worm wriggling sound |
| Worm scene | |
| Flower/Grass swaying scene | Flower/Grass swaying sound |
| Flower/Grass scene | |

For example, the intensity of the virtual audio is related to at least one of the following: a distance between the target object in the first video and an electronic device, a recording focal length of the first video, and a proportion of the target object in the first video, and the electronic device is a device for recording the first video.

For example, a shorter distance between the target object in the first video and the electronic device, a larger recording focal length of the first video, or a larger proportion of the target object in the first video indicates higher intensity of the virtual audio.

For example, there is a correspondence between the intensity of the virtual audio and the distance between the target object and the electronic device, or the recording focal length, or the proportion of the target object. The intensity of the virtual audio may be determined based on the distance between the target object in the first video and the electronic device, or the recording focal length of the first video, or the proportion of the target object in the first video, and the correspondence.

The correspondence may be a one-to-one correspondence, or may be a many-to-one correspondence. This is not limited in this application.

Optionally, after S720, the method 700 may further include S770: The electronic device displays at least one of the following in a second interface in response to a second operation performed on a second control in the second interface: a third control, a fourth control, a fifth control, and a sixth control.

The second interface is an interface for playing the first video. The third control is used to replace the virtual audio. The fourth control is used to perform audio-visual synchronization between the virtual audio and the first video. The fifth control is used to adjust the intensity of the virtual audio and/or intensity of the second audio. The sixth control is used to skip playing the virtual audio, that is, delete the virtual audio from the first video.

For example, as shown in FIG. 4(a), the second interface is the interface 205, and the second control is the edit control 207. As shown in FIG. 4(b), the third control is the sound effect replacement control 208, the fourth control is the time alignment control 209, the fifth control is the sound effect rendering intensity control 210, and the sixth control is the sound effect deletion control 211.

For specific examples of how to replace the virtual audio by using the third control, how to perform audio-visual synchronization between the virtual audio and the first video by using the fourth control, how to adjust the intensity of the virtual audio and/or the intensity of the second audio by using the fifth control, and how to delete the virtual audio from the first video by using the sixth control, refer to the related descriptions in FIG. 4(a), FIG. 4(b), FIG. 4(c), FIG. 4(d), FIG. 4(e), FIG. 4(f), and FIG. 4(j). Details are not described herein again.

According to the method 700, when the first audio corresponding to the first video includes only the first target audio, the intensity of the first audio is less than the first threshold, and the first preset scene exists in the first video, the virtual audio related to the first preset scene may be added, and the virtual audio related to the first preset scene, namely, the second audio, may be used as audio of the first video and played. Alternatively, when the first audio includes the first ambient audio and the first target audio, the signal-to-noise ratio of the first audio is less than the second threshold, and the first preset scene exists in the first video, the virtual audio related to the first preset scene may be added on the basis of the first ambient audio, and the first ambient audio and the virtual audio related to the first preset scene, namely, the second audio, may be used as audio of the first video and played, and a signal-to-noise ratio of the second audio is greater than the signal-to-noise ratio of the first audio. In this way, when a sound related to a status change of a photographed subject is small, a function of performing virtual rendering on the sound related to the status change of the photographed subject may be implemented. In this case, because the intensity of the virtual audio is greater than or equal to the first threshold or the signal-to-noise ratio of the second audio is greater than the signal-to-noise ratio of the first audio, the played first video and the second audio corresponding to the first video can well reflect a status of the photographed subject. In this way, the user has a stronger sense of immersion when watching the first video, which helps improve user experience.

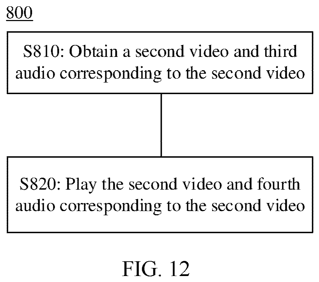

FIG. 12 is a schematic flowchart of another example video playing method 800 according to an embodiment of this application.

As shown in FIG. 12, the method 800 includes S810 and S820. The following describes S810 and S820 in detail.

S810: Obtain a second video and third audio corresponding to the second video.

A signal-to-noise ratio of the third audio is greater than or equal to a second threshold. For descriptions of the second threshold, refer to the related descriptions in the method 700. Details are not described herein again.

For example, the third audio includes second ambient audio and second target audio, and the signal-to-noise ratio of the third audio is greater than or equal to the second threshold, that is, a ratio of intensity of the second target audio to intensity of the second ambient audio is greater than or equal to the second threshold. Respective magnitudes of the intensity of the second ambient audio and the intensity of the second target audio are not limited.

It should be noted that when the signal-to-noise ratio is represented by decibel, the signal-to-noise ratio of the third audio may be represented as 10log(C/D) or 20log(C/D), where C is the intensity of the second target audio, and D is the intensity of the second ambient audio.

Optionally, in some embodiments, the signal-to-noise ratio of the third audio is greater than or equal to the second threshold, the signal-to-noise ratio of the third audio is less than or equal to a fifth threshold, and the fifth threshold is greater than the second threshold. In this case, it may be considered that S820 is performed only when the signal-to-noise ratio of the third audio is between the second threshold (including the second threshold) and the fifth threshold (including the fifth threshold).

The third audio may be understood as original audio of the second video.

The second ambient audio may be understood as a sound generated, in a process of recording the second video, by another object that is in an external environment and that is different from an object that generates the second target audio. For descriptions of a target object, refer to the following related descriptions. Details are not described herein again.

A trigger condition for obtaining the second video and the third audio in S810 is not limited in this embodiment of this application.

In an example, after an electronic device detects an operation of entering a video recording interface, the electronic device obtains the second video and the third audio. In this case, the trigger condition for obtaining the second video and the third audio is that the electronic device detects the operation of entering the video recording interface, and the second video may be a preview video.

For example, as shown in FIG. 6(a), after the mobile phone enters the preview interface 400 for video recording, the electronic device obtains a preview video (an example of the second video) including a blooming firework 402 and audio (an example of the third audio) corresponding to the blooming firework 402.

In another example, after an electronic device detects an operation of viewing the second video, the electronic device obtains the second video and the third audio. In this case, the trigger condition for obtaining the second video and the third audio is that the electronic device detects the operation of viewing the second video, and the second video may be a recorded video.

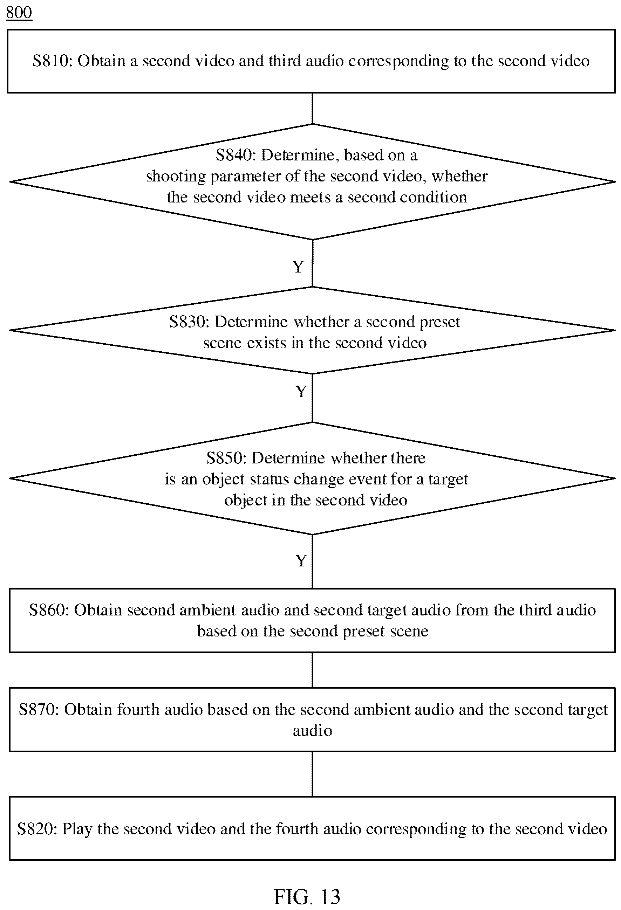

Optionally, in some embodiments, as shown in FIG. 13, between S810 and S820, the method 800 may further include S830. The following describes S830 in detail.

S830: The electronic device determines whether a second preset scene exists in the second video.

Specifically, when determining that the second preset scene exists in the second video, the electronic device performs S820; or when determining that the second preset scene does not exist in the second video, the electronic device does not perform S820.

For example, a user may set the second preset scene based on a requirement of the user. For example, the user may set, as the second preset scene, a scene in which an object (including an animal) in nature that (actively or passively) generates a sound whose intensity is prone to impact of a surrounding environment is located.

In some embodiments, the second preset scene includes but is not limited to a firework blooming scene, a firecracker lighting scene, and the like. In this case, the second preset scene is a dynamic preset scene.

In some other embodiments, the second preset scene includes but is not limited to a firework scene, a firecracker scene, and the like. In this case, the second preset scene is a static preset scene.

When the second preset scene exists in the second video, the second target audio is related to the second preset scene.

For example, the second target audio is real audio related to the second preset scene, namely, real audio generated by the target object in a real scene corresponding to the second preset scene. For descriptions of the target object, refer to the following related descriptions. Details are not described herein again.

For example, a trigger condition for S830 may be responding to a first operation performed on a first control in a first interface. That is, after the first operation performed by the user on the first control is detected in the first interface, it is determined whether the second preset scene exists in the second video. The first interface is an interface for obtaining the second video.

For example, as shown in FIG. 6(a), the first interface is the preview interface 400, the first control is the AI audio control 403, and the first operation is a tap operation.

The following describes S830 in detail by using a manner A, a manner B, and a manner C as examples.

In the manner A, it is determined, based on content of the second video, whether the second preset scene exists in the second video.

For example, the electronic device may include a second preset scene determining model. The electronic device inputs the second video into the second preset scene determining model. If the second preset scene exists in the second video, the second preset scene determining model outputs a result indicating that the second preset scene exists in the second video. If the second preset scene does not exist in the second video, the second preset scene determining model outputs a result indicating that the second preset scene does not exist in the second video. The second preset scene determining model is a model established based on the second preset scene.

In the manner B, it is determined, based on content of the third audio, whether the second preset scene exists in the second video.

For example, the electronic device may determine, based on the content of the third audio, whether the third audio is audio with a target type. If the third audio is audio with the target type, the second preset scene exists in the second video. If the third audio is not audio with the target type, the second preset scene does not exist in the second video.

For example, the electronic device includes an audio recognition model, the electronic device inputs the third audio into the audio recognition model, and the audio recognition model outputs a type of audio included in the third audio. Further, when the third audio includes audio of a noise type or audio of the target type, it is considered that the second preset scene exists in the second video. The audio recognition model is a model established based on a plurality of types of audio. The audio of the target type is related to the second preset scene. For example, if the second preset scene is a firework blooming scene, the audio of the target type includes firework blooming audio. For another example, if the second preset scene is a firecracker lighting scene or a firecracker, the audio of the target type includes firecracker lighting audio.

In the manner C, it is determined, based on content of the second video and content of the third audio, whether the second preset scene exists in the second video. In this case, the manner C is a combination of the manner A and the manner B, and when it is determined, in both the manner A and the manner B, that the second preset scene exists in the second video, it is determined that the second preset scene exists in the second video. Otherwise, it is determined that the second preset scene does not exist in the second video. For a specific process, refer to the corresponding descriptions of the manner A and the manner B. Details are not described herein again. Optionally, after S830, if the second video is a preview video or a video being recorded, the electronic device may further enter a shooting mode corresponding to the second preset scene.

Optionally, the electronic device may further display second prompt information in an interface for displaying the second video. The second prompt information is used to prompt entry into the shooting mode corresponding to the second preset scene.

For example, as shown in FIG. 6(b), the first prompt information may be the icon 404.

Optionally, as shown in FIG. 11, between S810 and S830, the method 800 may further include S840. The following describes S840 in detail.

S840: Determine, based on a shooting parameter of the second video, whether the second video meets a second condition.

Specifically, when it is determined that the second video meets the second condition, S830 and steps after S830 are performed; or when it is determined that the second video does not meet the second condition, execution of S830 and steps after S830 is ended.

If there are a plurality of second preset scenes in a preset scene library, for each second preset scene, the electronic device needs to perform S830. In this case, if S840 is performed before S830, and it is determined, in S840, that the second video meets the second condition, the electronic device considers that there is a high probability that the second preset scene exists in the second video. In this way, the electronic device can increase a frequency of performing S830, thereby reducing power consumption of the electronic device. If S840 is performed before S830, and it is determined, in S840, that the second video does not meet the second condition, the electronic device considers that there is a high probability that the second preset scene does not exist in the second video. In this case, the electronic device still performs S830 at a normal frequency.

For example, the shooting parameter may include a shooting focal length, a shooting range, and a proportion of an object. The second condition includes: The recording focal length of the second video becomes smaller, the shooting range of the second video changes, the proportion of the object is greater than or equal to a fourth threshold, and so on.

The object may be understood as any object in the second video. For example, the object may be a firework, a firecracker, a blue sky, a white cloud, or a building.

When the shooting parameter includes the recording focal length, the second condition includes that the recording focal length of the second video becomes smaller. In this way, S840 includes that when it is determined that the recording focal length of the second video becomes smaller, it is determined that the second preset scene exists in the second video. In this case, it may be considered that in a process of obtaining the second video, a shooting picture is zoomed in, to capture a distant object more clearly.

For example, if a device for obtaining the second video is an execution body of the method 800, namely, the electronic device, and the second video is a preview video or a video being recorded, it may be determined, by using a focal length change of a camera on the electronic device, whether the recording focal length of the second video becomes smaller.

When the shooting parameter includes the shooting range, the second condition includes that the shooting range of the second video changes. In this way, S840 includes that when it is determined that the shooting range of the second video changes, it is determined that the second preset scene exists in the second video. In this case, it may be considered that in a process of obtaining the second video, the shooting range is adjusted to capture a desired shooting scene.

For example, if a device for obtaining the second video is an execution body of the method 800, namely, the electronic device, and the second video is a preview video or a video being recorded, it may be determined, by using a sensor (for example, a gyroscope sensor) on the electronic device, whether a posture (for example, whether there is a rotation or pitch posture) of the electronic device changes, so as to determine whether the shooting range of the second video changes.

When the shooting parameter includes the proportion of the object, the second condition includes that the proportion of the object is greater than or equal to the fourth threshold, and so on. In this way, S840 includes that when the proportion of the object is greater than or equal to the fourth threshold, it is determined that the second video meets the second condition.

A specific value of the fourth threshold is not limited in this embodiment of this application. For example, the fourth threshold may be greater than or equal to 10%.

Optionally, as shown in FIG. 13, after S810, the method 800 may further include S850. An execution sequence of S850 and S830 is not limited in this application. The following describes S850 in detail.

S850: Determine whether there is an object status change event for the target object in the second video.

Specifically, when it is determined that there is an object status change event for the target object in the second video, steps after S850 are performed; or when it is determined that there is no object status change event for the target object in the second video, execution of steps after S850 is ended.

For example, statuses of a same object in a plurality of image frames in the second video may be compared, to determine whether there is an object status change event in the second video.

For example, if the second preset scene is a firework blooming scene, when it is determined, through comparison, that a firework in the plurality of image frames in the second video blooms, it may be considered that there is an object status change event in the second video.

For another example, if the first preset scene is a firecracker lighting scene, when it is determined, through comparison, that a firecracker in the plurality of image frames in the second video is lit, it may be considered that there is an object status change event in the second video.

The target object is related to the second preset scene.

For example, an example between the second preset scene and the target object is shown in Table 3.

**Table 3**

| Second preset scene | Target object |
|---|---|
| Firework blooming | Firework |
| Firecracker lighting | Firecracker |

A specific value of the third threshold is not limited in this embodiment of this application. For example, the third threshold may be 50%.

Optionally, in some embodiments, as shown in FIG. 13, after S830, the method 800 further includes S860 and S870. The following describes S860 and S870 in detail.

S860: Obtain the second ambient audio and the second target audio from the third audio based on the second preset scene.

Specifically, the third audio may be divided into tracks based on the second preset scene, to obtain the second ambient audio and the second target audio.

A method for dividing the third audio into tracks is not limited in this embodiment of this application.

In an example, the third audio may be divided into tracks by using a neural network model. The neural network model may be obtained through training by using audio corresponding to the second preset scene based on a deep learning principle.

For example, if the second preset scene is a firework blooming scene or a firework scene, the third audio may be divided into tracks of firework blooming audio and other audio by using a first neural network model. The first neural network model is obtained through training based on a difference (for example, a feature in time domain, frequency domain, or spatial domain) between a firework blooming sound and other audio in a large quantity of firework blooming scenes or firework scenes. Herein, the firework audio may be understood as the second target audio, and the other audio may be understood as the second ambient audio.

For another example, if the second preset scene is a firecracker lighting scene or a firecracker scene, the third audio may be divided into tracks of firecracker lighting audio and other audio by using a second neural network model. The second neural network model is obtained through training based on a difference (for example, a feature in time domain, frequency domain, or spatial domain) between a firecracker lighting sound and other audio in a firecracker lighting scene or a firecracker scene. Herein, the firecracker lighting audio may be understood as the second target audio, and the other audio may be understood as the second ambient audio.

In another example, the third audio may be divided into tracks by using a conventional algorithm such as a probabilistic model. For example, a person may establish the probabilistic model based on features of a plurality of segments of audio and experience of the person. In this way, the third audio may be divided into tracks of a plurality of segments of audio based on the probabilistic model.

S870: Obtain fourth audio based on the second ambient audio and the second target audio.

Content of the fourth audio is the same as the content of the third audio, and a signal-to-noise ratio of the fourth audio is greater than the signal-to-noise ratio of the third audio.

For example, the signal-to-noise ratio of the third audio may be increased by adjusting a gain between the second ambient audio and the second target audio, to obtain the fourth audio.

A manner of adjusting the gain between the second ambient audio and the second target audio is not limited in this embodiment of this application.

In an example, the intensity of the second target audio may be increased, and the intensity of the second ambient audio may be kept unchanged. Alternatively, the intensity of the second target audio is kept unchanged, and the intensity of the second ambient audio is reduced. Alternatively, the intensity of the second target audio is increased, and the intensity of the second ambient audio is reduced.

In this way, in this example, the fourth audio includes third ambient audio and third target audio, content of the third ambient audio is the same as content of the second ambient audio, content of the third target audio is the same as content of the second target audio, and a ratio of intensity of the third target audio to intensity of the third ambient audio is greater than the ratio of the intensity of the second target audio to the intensity of the second ambient audio. That is, the signal-to-noise ratio of the fourth audio is greater than the signal-to-noise ratio of the third audio, and the fourth audio and the third audio have same content except that the signal-to-noise ratios are different.

When two segments of audio with same audio content are played, a same sound made by a same object may be heard. For example, when the third audio is played, the firework blooming sound may be indistinctly heard. When the fourth audio is played, the firework blooming sound may be clearly heard. In another example, the second ambient audio is removed from the third audio to obtain the fourth audio.

In this way, in this example, the fourth audio includes only the second target audio, and does not include the second ambient audio.

Optionally, in some embodiments, an adaptive adjustment model may further obtain the fourth audio based on at least one of the following: a distance between the target object in the second video and an electronic device, a recording focal length of the second video, and a proportion of the target object in the second video. The electronic device is a device for recording the second video.

For example, a shorter distance between the target object in the second video and the electronic device, a larger recording focal length of the second video, or a larger proportion of the target object in the second video indicates a larger signal-to-noise ratio of the fourth audio.

S820: Play the second video and the fourth audio corresponding to the second video.

Optionally, after S820, the method 800 may further include S880: Display at least one of the following in a second interface in response to a second operation performed on a second control in the second interface: a third control, a fourth control, a fifth control, and a sixth control.

The second interface is an interface for playing the second video. The third control is used to replace the fourth audio. The fourth control is used to perform audio-visual synchronization between the fourth audio and the second video. The fifth control is used to adjust intensity of the fourth audio and/or the intensity of the third target audio in the fourth audio. The sixth control is used to skip playing the fourth audio, that is, delete the fourth audio from the second video.

For example, as shown in FIG. 7(a), the second interface is the interface 405, and the second control is the edit control 407. As shown in FIG. 7(b), the third control is the sound effect replacement control 408, the fourth control is the time alignment control 409, the fifth control is the sound effect rendering intensity control 410, and the sixth control is the sound effect deletion control 411.

For specific examples of how to replace the fourth audio by using the third control, how to perform audio-visual synchronization between the fourth audio and the second video by using the fourth control, how to adjust the intensity of the fourth audio and/or the intensity of the third target audio in the fourth audio by using the fifth control, and how to delete the fourth audio from the second video by using the sixth control, refer to the related descriptions in FIG. 7(a), FIG. 7(b), and FIG. 7(c). Details are not described herein again.

According to the method 800, when the signal-to-noise ratio of the third audio corresponding to the second video is greater than or equal to the second threshold, and the second preset scene exists in the second video, the signal-to-noise ratio of the third audio may be increased to obtain the fourth audio, and the fourth audio is played as audio of the second video. In this way, when an effect of a sound related to a status change of a photographed subject is poor, a function of adaptively enhancing the sound related to the status change of the photographed subject is implemented. In this case, because the signal-to-noise ratio of the fourth audio is greater than the signal-to-noise ratio of the third audio, the played fourth audio can well reflect a status of the photographed subject. In this way, the user has a stronger sense of immersion when watching the second video, which helps improve user experience.

It may be learned from the method 700 and the method 800 that the electronic device obtains a video and audio corresponding to the video, processes the audio corresponding to the video in different manners based on a status of the audio corresponding to the video, and plays processed audio and the video.

For example, if the audio corresponding to the video includes only the first target audio related to the target object in the first preset scene, the intensity of the first audio is less than the first threshold, and the first preset scene exists in the video, the virtual audio related to the target object in the first preset scene may be added, and the virtual audio related to the target object in the first preset scene may be used as audio of the video and played. In this case, it may be considered that a virtual sound effect rendering function is implemented.

For example, if the audio corresponding to the video includes the first ambient audio and the first target audio related to the target object in the first preset scene, the signal-to-noise ratio of the first audio is less than the second threshold, and the first preset scene exists in the video, the virtual audio related to the target object in the first preset scene may be added on the basis of the first ambient audio, and the first ambient audio and the virtual audio related to the target object in the first preset scene may be used as audio of the video and played, and the signal-to-noise ratio of the second audio is greater than the signal-to-noise ratio of the first audio. In this case, it may be considered that a virtual sound effect rendering function is implemented.

For example, if a signal-to-noise ratio of the audio corresponding to the video is greater than or equal to the second threshold, and the second preset scene exists in the video, the signal-to-noise ratio of the audio may be increased, and audio obtained after the signal-to-noise ratio is increased is used as audio of the video and played. In this case, it may be considered that a sound enhancement function is implemented.

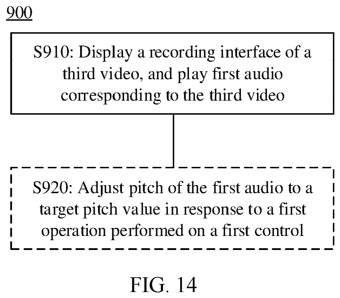

FIG. 14 is a schematic flowchart of another example video playing method 900 according to an embodiment of this application.

As shown in FIG. 14, the method 900 includes the following steps.

S910: An electronic device displays an interface of a third video, and plays audio corresponding to the third video.

A recording mode of the third video is a slow-motion recording mode or a fast-motion recording mode.

For example, when a video is recorded in a normal recording mode, if an image is captured at a rate of evenly capturing P images per second, the video is played at a play rate of evenly playing P images per second. In this case, if a slowdown rate in the slow-motion recording mode is D, when the third video is recorded in the slow-motion recording mode, an image needs to be captured at a rate of evenly capturing D×P images per second, and the third video is played at a rate of evenly playing P images per second. In this way, play duration of the video recorded in the slow-motion recording mode is D times play duration of the video recorded in the normal recording mode.

For example, when a video is recorded in a normal recording mode, if an image is captured at a rate of evenly capturing P images per second, the video is played at a play rate of evenly playing P images per second. In this case, if a speed-up rate in the fast-motion recording mode is F, when a video is recorded in the fast-motion recording mode, an image needs to be captured at a rate of evenly capturing P images per second, (F-1) images need to be discarded at an interval of one image (a total of P(1-1/F) images are discarded), and the remaining P/F images are played at a rate of evenly playing P images per second. In this way, play duration of the video recorded in the fast-motion recording mode is 1/F times play duration of the video recorded in the normal recording mode.

In an example, in the slow-motion recording mode or the fast-motion recording mode, the audio of the third video is obtained based on a time stretching with pitch preservation processing manner. In this case, the audio of the third video is audio obtained through time stretching with pitch preservation.

In another example, in the slow-motion recording mode or the fast-motion recording mode, the audio of the third video is obtained based on a time stretching and pitch shifting processing manner. In this case, the audio of the third video is audio obtained through time stretching and pitch shifting.

Optionally, the electronic device may further display a switch in an interface for displaying the third video.

In some embodiments, when the switch is in an on state, the switch is configured to process the audio of the third video in the time stretching with pitch preservation processing manner; or when the switch is in an off state, the switch is configured to process the audio of the third video in the time stretching and pitch shifting processing manner.

In an example, when the third video is recorded, the switch is in the off state by default. In this way, if a user wants to process the audio of the third video in the time stretching with pitch preservation processing manner, the user may enable the switch to be in the on state. For example, as shown in FIG. 8(a), the switch may be the switch 504. In this case, the switch 504 is in the off state.

In another example, when the third video is recorded, the switch is in the on state by default. In this way, if a user wants to process the audio of the third video in the time stretching and pitch shifting processing manner, the user may enable the switch to be in the off state.

In some other embodiments, when the switch is in an on state, the switch is configured to process the audio of the third video in the time stretching and pitch shifting processing manner; or when the switch is in an off state, the switch is configured to process the audio of the third video in the time stretching with pitch preservation processing manner.

In an example, when the third video is recorded, the switch is in the off state by default. In this way, if a user wants to process the audio of the third video in the time stretching and pitch shifting processing manner, the user may enable the switch to be in the on state.

In another example, when the third video is recorded, the switch is in the on state by default. In this way, if a user wants to process the audio of the third video in the time stretching with pitch preservation processing manner, the user may enable the switch to be in the off state.

It should be understood that if the recording mode of the third video is the slow-motion recording mode, the foregoing time stretching is reducing a play rate, and the foregoing pitch shifting is lowering pitch.

If the recording mode of the third video is the fast-motion recording mode, the foregoing time stretching is increasing a play rate, and the foregoing pitch shifting is raising pitch.

The following describes processing processes of time stretching with pitch preservation processing, time stretching and pitch shifting processing, and pitch shifting with tempo preservation processing on the audio corresponding to the third video in the method 900.

It should be noted that the manners of time stretching with pitch preservation processing, time stretching and pitch shifting processing, and pitch shifting with tempo preservation processing may not only be used for processing of real audio, but also may be used for processing of virtual audio. In addition, when the manners of time stretching with pitch preservation processing, time stretching and pitch shifting processing, and pitch shifting with tempo preservation processing are used for processing of virtual audio, an adjustment multiple of pitch of the virtual audio is an adjustment multiple relative to pitch of original virtual audio. The pitch of the original virtual audio is not pitch of the virtual audio in original audio, but is audio that matches a motion rule of a target object in an original video.

(1) Time stretching with pitch preservation processing: This may be implemented by using a time stretching with pitch preservation algorithm.

For example, the time stretching with pitch preservation algorithm may include a time-domain method, a frequency-domain method, a parametric method, and the like. For example, the time-domain method may be a cutting method, a synchronous overlap-add method, a synchronous overlap-add with fixed synthesis method, a time-domain pitch-synchronous overlap-add method, a waveform similarity overlap-add method, and the like. The frequency-domain method may be a method based on least-square error estimation from modified short-time Fourier transform magnitude (least-square error estimation from modified short-time Fourier transform magnitude, LSEE-MSTFTM). The parametric method may be a phase vocoder, a sinusoidal modeling method, and the like.

When the third video is recorded in the slow-motion recording mode, the time stretching with pitch preservation algorithm implements a tempo-down with pitch preservation function. A principle of the algorithm is as follows: An audio signal is divided into several consecutive non-overlapping frames, and then some speech frames are repeatedly played, to implement slow playing of the audio signal. For example, a quantity of times the speech frame is repeatedly played may be a slowdown multiple in the slow-motion recording mode. For example, if the slowdown multiple is m, and the original audio includes n speech frames, each speech frame is repeatedly played for m times, so that duration of a finally obtained audio signal is m times duration of an audio signal corresponding to the video recorded in the normal recording mode, and pitch of the finally obtained audio signal is the same as pitch of the audio signal corresponding to the video recorded in the normal recording mode. In this way, play duration of the audio corresponding to the third video recorded in the slow-motion recording mode is m times the play duration of the audio signal corresponding to the video recorded in the normal recording mode, and pitch of the audio corresponding to the third video recorded in the slow-motion recording mode is the same as the pitch of the audio corresponding to the video recorded in the normal recording mode.

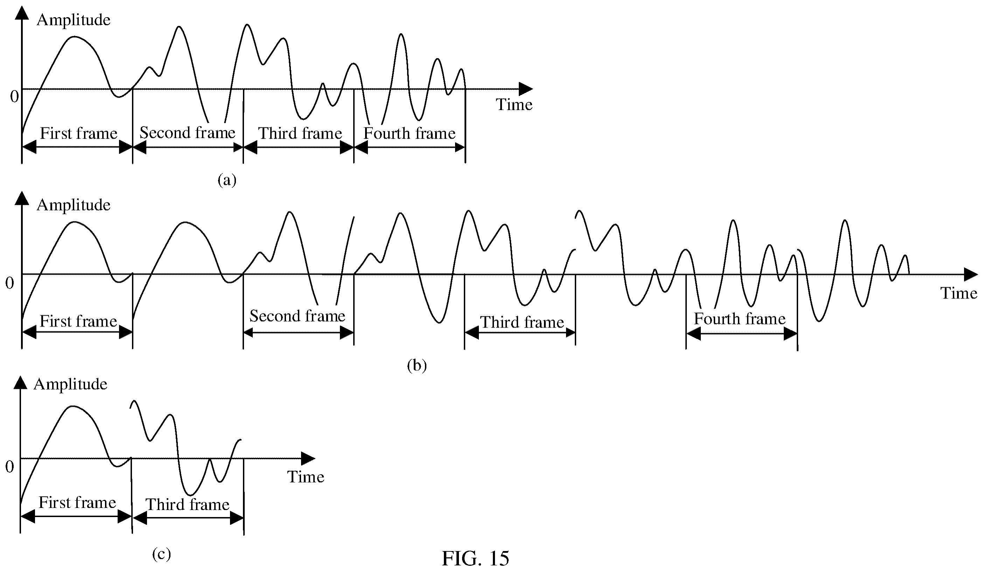

Audio shown in (a) in FIG. 15 is an audio signal corresponding to the video recorded in the normal recording mode, and the audio signal includes four speech frames (a first frame to a fourth frame). If the user shoots the third video in the slow-motion mode (the slowdown multiple is 2×), each of the four speech frames in the audio signal shown in (a) in FIG. 15 is repeatedly played twice, to obtain an audio signal shown in (b) in FIG. 15. In this case, play duration of the audio signal shown in (b) in FIG. 15 is twice play duration of the audio signal shown in (a) in FIG. 15, and pitch of the audio signal shown in (b) in FIG. 15 is the same as pitch of the audio signal shown in (a) in FIG. 15.

When the third video is recorded in the fast-motion recording mode, the time stretching with pitch preservation algorithm implements a tempo-up with pitch preservation function. A principle of the algorithm is as follows: An audio signal is divided into several consecutive non-overlapping frames, then some speech frames are discarded, and the remaining speech frames are played, to implement fast playing of the audio signal. For example, a quantity of times the speech frame is repeatedly played may be a slowdown multiple in the slow-motion recording mode. For example, if a speed-up multiple is p, and the original audio includes q speech frames, (p-1) speech frames may be discarded at an interval of one speech frame (a total of q(1-1/p) images are discarded), and the remaining q/p speech frames are played at a rate of evenly playing q speech frames per second, so that play duration of the remaining q/p speech frames is 1/p times play duration of an audio signal corresponding to the video recorded in the normal recording mode, and pitch of a finally obtained audio signal is the same as pitch of the audio signal corresponding to the video recorded in the normal recording mode. In this way, play duration of the audio corresponding to the third video recorded in the fast-motion recording mode is 1/p times the duration of the audio signal corresponding to the video recorded in the normal recording mode, and pitch of the audio corresponding to the third video recorded in the fast-motion recording mode is the same as the pitch of the audio corresponding to the video recorded in the normal recording mode.

If the user shoots the third video in the fast-motion mode (the speed-up multiple is 2×), a second frame and a fourth frame in four speech frames in original audio shown in (a) in FIG. 15 are discarded, and a first frame and a third frame are played, to obtain an audio signal shown in (c) in FIG. 15. In this case, play duration of the audio signal shown in (c) in FIG. 15 is 1/2 times play duration of the audio signal shown in (a) in FIG. 15, and pitch of the audio signal shown in (c) in FIG. 15 is the same as pitch of the audio signal shown in (a) in FIG. 15.

(2) Time stretching and pitch shifting processing: This may be implemented by using a time stretching and pitch shifting algorithm.

For example, the time stretching and pitch shifting algorithm may include a time-domain method, a frequency-domain method, a parametric method, and the like. For example, the time-domain method may be a resampling method. The frequency-domain method may be based on LSEE-MSTFTM. The parametric method may be a sinusoidal modeling method, and the like.

For example, when the time stretching and pitch shifting algorithm is the time-domain method, the time stretching and pitch shifting algorithm may be classified into a tempo-down and pitch lowering algorithm and a tempo-up and pitch raising algorithm. The tempo-down and pitch lowering algorithm is mainly applied to the slow-motion recording mode, and the tempo-up and pitch raising algorithm is mainly applied to the fast-motion recording mode.

### (a) Tempo-down and pitch lowering algorithm

If a resampling factor is an upsampling factor P, an upsampling process is as follows: (P-1) sampling points are interpolated between two adjacent points of an original audio signal (an audio signal of the video recorded in the normal recording mode). In digital signal processing, interpolation in time domain is equivalent to stretching in time domain, and corresponds to compression in frequency domain. In this way, a period of an audio signal becomes P times a period of the original audio signal, a spectrum of the audio signal is compressed to 1/P times a spectrum of the original audio signal, and duration of the audio signal becomes P times duration of the original audio signal. Further, play duration of the finally obtained audio signal is P times play duration of the original audio signal, and pitch of the finally obtained audio signal is 1/P times pitch of the original audio signal. In this way, tempo-down and pitch lowering are implemented for the audio signal.

### (b) Tempo-up and pitch raising algorithm

If a resampling factor is a downsampling factor Q, a downsampling process is as follows: Decimation from an original audio signal (an audio signal of the video recorded in the normal recording mode) is performed at an interval of (Q-1) points. In digital signal processing, decimation in time domain is equivalent to compression in time domain, and corresponds to expansion in frequency domain. In this way, a period of an audio signal becomes 1/Q times a period of the original audio signal, a spectrum of the audio signal is expanded to Q times an original spectrum, and duration of the audio signal becomes 1/Q times duration of the original audio signal. Further, play duration of the finally obtained audio signal is 1/Q times play duration of the original audio signal, and pitch of the finally obtained audio signal is Q times pitch of the original audio signal. In this way, tempo-up and pitch raising are implemented for the audio signal.

(3) Pitch shifting with tempo preservation processing: This may be implemented by combining time stretching and pitch shifting processing and time stretching with pitch preservation processing.

For example, first, in a process of performing time stretching and pitch shifting processing on an original audio signal (an audio signal of the video recorded in the normal recording mode), pitch of the original audio signal is reduced to 1/P times original pitch, and a play rate of the original audio signal is changed to 1/P times an original rate, to obtain a first processed audio signal. Then, in a process of performing time stretching with pitch preservation processing on the first processed audio signal, a play rate of the first processed audio signal is changed to P times the original rate, and pitch of the first processed audio signal is kept unchanged, to obtain a second processed audio signal. In this way, pitch of the second processed audio signal is 1/P times the pitch of the original audio signal, and a play rate of the second processed audio signal is the play rate of the original audio signal.

For example, the interface further includes a first control, and the first control is used to adjust pitch of the audio corresponding to the third video.

For example, as shown in FIG. 8(b), the interface is the preview interface 500, and the first control is the pitch adjustment bar 505. For another example, as shown in FIG. 9(c), the interface is the interface 601, and the first control is the pitch adjustment bar 60311.

Optionally, in some embodiments, the interface further includes a second control. The method 900 further includes the following steps: S920: Display the first control in response to a first operation performed on the second control; and S930: Adjust the pitch of audio corresponding to the third video to a target pitch value in response to a second operation performed on the first control.

For example, as shown in FIG. 8(a), the second control is the switch 504. For another example, as shown in FIG. 9(b), the second control is the pitch control 6031.

For example, the first operation is an operation of touching and holding the switch 504 shown in FIG. 8(a), and the second operation is an operation of sliding a pitch adjustment multiple in the pitch adjustment bar 505 shown in FIG. 8(b).

For another example, the first operation is an operation of tapping the pitch control 6031 shown in FIG. 9(b), and the second operation is an operation of sliding a pitch adjustment multiple in the pitch adjustment bar 60311 shown in FIG. 9(c).

The target pitch value is related to the second operation. For example, the target pitch value is a pitch adjustment multiple in the pitch adjustment bar 505 shown in FIG. 8(b) after the second operation is performed. For another example, as shown in FIG. 9(c), the target pitch value is a pitch adjustment multiple in the pitch adjustment bar 60311 shown in FIG. 9(c) after the second operation is performed.

Optionally, in some embodiments, the interface further includes a third control, and the third control is used to adjust a play speed of the audio corresponding to the third video.

For example, the third control is the control 503 shown in FIG. 8(a).

According to the method 900, in the slow-motion recording mode or the fast-motion recording mode, the pitch of the audio corresponding to the shot third video may be adjusted based on a requirement of the user. This helps improve user experience.

It should be noted that the video in the method 700, the method 800, and the method 900 includes a frame of image data, and does not include audio data. In this way, when the video is played, the user can see only a frame of image, but cannot hear a sound. In addition, the audio in embodiments of this application includes audio data, and does not include image data. In this way, when the audio is played, the user can hear only a sound, but cannot see an image.

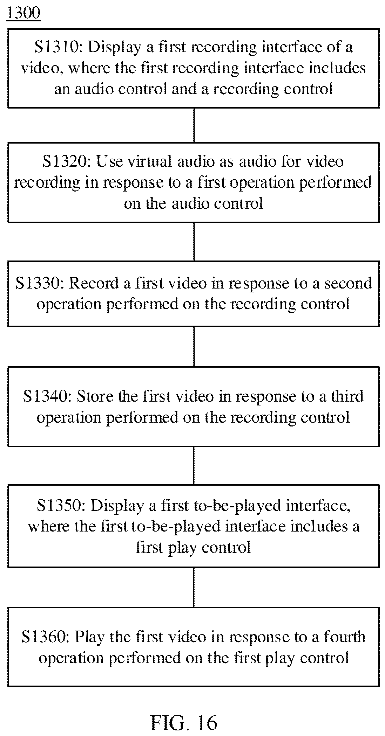

FIG. 16 is a schematic flowchart of an example video recording method 1300 according to an embodiment of this application.

The method 1300 may be applied to an electronic device. The electronic device may be the electronic device shown in FIG. 1 or FIG. 2, or the electronic device may be the mobile phone shown in FIG. 3(a) and FIG. 3(b) or FIG. 4(a), FIG. 4(b), FIG. 4(c), FIG. 4(d), FIG. 4(e), FIG. 4(f), and FIG. 4(j).

As shown in FIG. 16, the method 1300 includes S1310 to S1340. The following describes S1310 to S1340 in detail.

S1310: Display a first recording interface of a video.

The first recording interface includes an audio control and a recording control. The audio control is used to enable or disable a video recording mode for adding virtual audio. The recording control is used to start or end video recording.

The first recording interface further includes a target object. For descriptions of the target object, refer to the related description in S710. Details are not described herein again.

For example, the first recording interface may be the preview interface 200 shown in FIG. 3(a). The audio control may be the control 203 shown in FIG. 3(a). The recording control may be a black control below "Video" shown in FIG. 3(a).

In a video recording process, because a real sound generated by the target object is small or a distance between the electronic device and the target object is long, the electronic device cannot pick up a sound of the target object or the electronic device picks up a small sound of the target object within a shooting distance. Therefore, when a first video is played, a user almost cannot hear the sound of the object in audio corresponding to the first video. In this way, the user may enable an intelligent audio recording function, and may additionally add virtual audio in a video recording process, and use the virtual audio as audio for video recording. That is, the electronic device performs S1320.

It should be noted that the virtual audio may also be referred to as a virtual sound effect, and may be audio generated by emulating/simulating/rendering the target object. That is, the virtual audio is audio that does not exist in a video recording scene. The virtual audio may be the same as or different from real audio generated by the target object in the first recording interface. This is not limited in this application.

S1320: Use virtual audio as audio for video recording in response to a first operation performed on the audio control.

The virtual audio is audio related to the target object in the first video. For example, an example of the virtual audio is shown in Table 2, and an example of the target object is shown in Table 1.

In an example, after responding to the operation performed on the audio control, the electronic device may determine, based on content of a recorded video, that a first preset scene exists in the recorded video, and then use virtual audio corresponding to the first preset scene as audio of the video. For a solution of determining whether the first preset scene exists in the recorded video, refer to the related descriptions in S730. Details are not described herein again.

In another example, after responding to the operation performed on the audio control, the electronic device may further display a plurality of virtual sound effect recording scene controls in the recording interface, so that the user selects a target virtual sound effect recording scene required by the user from the plurality of virtual sound effect recording scene controls. In this way, after detecting that the user taps a target virtual sound effect recording scene control, the electronic device uses a virtual sound effect corresponding to the target virtual sound effect recording scene control as audio for video recording.

Herein, the virtual sound effect recording scene may be the foregoing first preset scene.

For example, the operation performed on the audio control may be an operation of tapping the audio control.

It should be noted that if the audio control is in a state in which the video recording mode for adding virtual audio is disabled in S1310, when the user wants to enable the intelligent audio recording function, the electronic device needs to perform S1320. If the audio control is in a state in which the video recording mode for adding virtual audio is enabled in S1310, the virtual audio is directly used as audio of the first video in S1320, and there is no need to detect whether there is an operation performed on the audio control.

S1330: Record the first video in response to a second operation performed on the recording control.

For example, the second operation may be an operation of tapping the recording control.

In some embodiments, in a video recording process, the virtual audio described in S1320 may be further played in real time.

For example, intensity of the played virtual audio is related to at least one of the following: a distance between the target object in the first video and an electronic device, a recording focal length of the first video, and a proportion of the target object in the first video, and the electronic device is a device for recording the first video.

For example, a shorter distance between the target object and the electronic device indicates higher intensity of the played virtual audio, a larger recording focal length of the first video indicates higher intensity of the played virtual audio, and a larger proportion of the target object indicates higher intensity of the played virtual audio.

For example, the virtual audio may be played in a target time. The target time is a time in which a status of the target object changes.

For example, if the recorded video is a bubble bursting scene, the virtual audio may be bubble bursting audio. In this case, virtual audio corresponding to bubble bursting may be played in a bubble bursting time. In this way, each time the bubble bursts, the virtual audio corresponding to bubble bursting is played.

For another example, if the recorded video is an insect wing fluttering scene, the virtual audio may be insect wing fluttering audio. In this case, virtual audio corresponding to insect wing fluttering may be played in an insect wing fluttering time. In this way, each time wings of the insect flutter, the virtual audio corresponding to insect wing fluttering is played.

Optionally, in some embodiments, between S1320 and S1330, the method 1300 further includes S1370: Display an icon in the first recording interface, where the icon indicates that the electronic device is in a video recording mode corresponding to a target preset scene. The target preset scene is related to the virtual audio. For example, the icon may be the icon 204 shown in FIG. 3(a). The target preset scene herein may be understood as the first preset scene in S1320.

S1340: Store the first video in response to a third operation performed on the recording control.

It should be understood that storing the first video may be understood as not only storing the first video and the virtual audio corresponding to the first video, but also storing the first video and the virtual audio corresponding to the first video as a correspondence. In this way, when the first video is played, the virtual audio corresponding to the first video may be synchronously played.

S1350: Display a first to-be-played interface of a video. The first to-be-played interface includes a play control.

For example, the to-be-played interface of the video may be the interface 205 shown in FIG. 4(a), and the play control may be a play control on a cup shown in FIG. 4(a).

S1360: Play the first video in response to a fourth operation performed on the play control.

When the first video is played, audio of the first video is simultaneously played. The audio of the first video includes the virtual audio. For related content of playing the virtual audio, refer to the related descriptions in S1330. Details are not described herein again.

Optionally, in some embodiments, the first to-be-played interface further includes an edit control. After S1350, the method 1300 further includes S1380: Display at least one of the following in the first to-be-played interface in response to an operation performed on the edit control: a sound effect replacement control, a time alignment control, a sound effect rendering intensity control, and a sound effect deletion control.

The sound effect replacement control is used to change the virtual audio. The time alignment control is used to perform audio-visual synchronization between the virtual audio and the first video. The sound effect rendering intensity control is used to adjust the intensity of the virtual audio. The sound effect deletion control is used to delete the virtual audio from a sound effect corresponding to the first video.

For example, the edit control may be the edit control 207 shown in FIG. 4(a). The sound effect replacement control may be the sound effect replacement control 208 shown in FIG. 4(b). The time alignment control may be the time alignment control 209 shown in FIG. 4(b). The sound effect rendering intensity control time may be the sound effect rendering intensity control 210 shown in FIG. 4(b). The sound effect deletion control may be the sound effect deletion control 211 shown in FIG. 4(b).

For how to adjust the virtual audio by using the sound effect replacement control, the time alignment control, the sound effect rendering intensity control, and the sound effect deletion control, refer to the related descriptions in FIG. 4(a), FIG. 4(b), FIG. 4(c), FIG. 4(d), FIG. 4(e), FIG. 4(f), and FIG. 4(j). Details are not described herein again.

Optionally, in some embodiments, if the user does not want to enable the intelligent audio recording function, the method 1300 further includes S1390 to S1430. The following describes S1390 to S1430 in detail.

S1390: Display a second recording interface of a video, where the second recording interface includes the audio control and the recording control, and the second recording interface includes the target object.

For related descriptions of the audio control, the recording control, and the target object, refer to the related descriptions in S1310. Details are not described herein again.

S1400: Record a second video in response to a fifth operation performed on the recording control.

The audio control is not selected. That is, the audio control is in a state in which the video recording mode for adding virtual audio is disabled.

S1410: Store the second video in response to a sixth operation performed on the recording control.

S1420: Display a second to-be-played interface, where the second to-be-played interface includes a second play control.

S1430: Play the second video in response to a seventh operation performed on the second play control.

When the second video is played, audio of the second video does not include the virtual audio, or audio of the second video is inconsistent with the virtual audio.

In an example, the audio of the second video may include real audio picked up by the electronic device in a process of recording the second video, for example, ambient audio. In another example, the audio of the second video may not include any audio.

In the method 1300, in a video recording process, because a real sound generated by the target object is small or a distance between the electronic device and the target object is long, the electronic device cannot pick up a sound of the target object or the electronic device picks up a small sound of the target object within a shooting distance. Therefore, when a video is played, the user almost cannot hear the sound of the target object in audio corresponding to the video. In this way, when the user enables the intelligent audio recording function, in the video recording process, virtual audio related to the target object may be additionally added to the video. Further, when the video is played, the virtual audio may be played synchronously as audio of the video. When the user still does not want to enable the intelligent audio recording function, in the video recording process, there is no need to additionally add virtual audio related to the target object to the video. Further, when the video is played, audio that is of the video and that is synchronously played is no longer the virtual audio, or audio that is of the video and that is synchronously played is no longer consistent with the virtual audio.

It should be noted that the video in the method 1300 includes not only a frame of image data but also audio data. In this way, when the video is played, the user can not only see a frame of image, but also hear a sound.

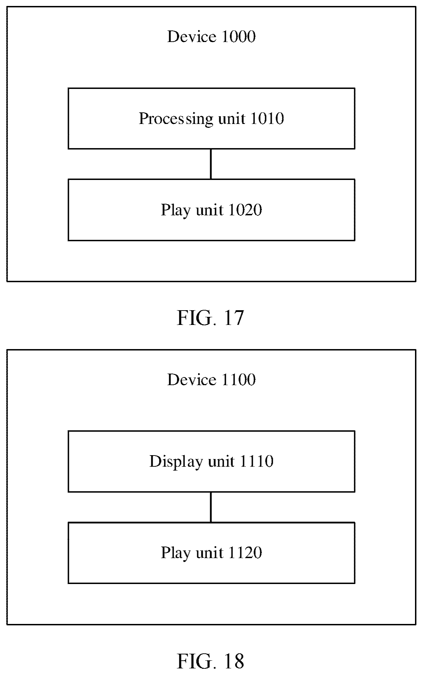

With reference to FIG. 17 to FIG. 20, the following describes the device provided in embodiments of this application.

FIG. 17 is a block diagram of a device according to an embodiment of this application.

For example, as shown in FIG. 17, the device 1000 includes a processing unit 1010 and a play unit 1020. The processing unit 1010 is configured to perform data processing, for example, obtain a first video and first audio corresponding to the first video. The play unit 1020 is configured to play a video and/or audio.

Specifically, the device 1000 may be configured to perform an action performed by the electronic device in the method 700 or the method 800. In this case, the device 1000 may be an electronic device or a component that can be configured in an electronic device. The processing unit 1010 is configured to perform a processing-related operation of the electronic device in the method 700 or the method 800. The play unit 1020 is configured to perform a play-related operation of the electronic device in the method 700 or the method 800.

Optionally, in some embodiments, the device 1000 may further include a display unit 1030, configured to perform a display-related operation of the electronic device in the method 700 or the method 800.

Optionally, in some embodiments, the device 1000 may further include a transceiver unit. The transceiver unit may communicate with the outside, and the transceiver unit may also be referred to as a communication interface or a communication unit.

Optionally, in some embodiments, the device 1000 may further include a storage unit. The storage unit may be configured to store instructions and/or data, and the processing unit 1010 may read the instructions and/or the data in the storage unit.

FIG. 18 is a block diagram of another device according to an embodiment of this application.

For example, as shown in FIG. 18, the device 1100 includes a display unit 1110 and a play unit 1120. The display unit 1110 is configured to display a video, and the play unit 1120 is configured to play audio.

Specifically, the device 1100 may be configured to perform an action performed by the electronic device in the method 900. In this case, the device 1100 may be an electronic device or a component that can be configured in an electronic device. The display unit 1110 is configured to perform a display-related operation of the electronic device in the method 900. The play unit 1120 is configured to perform a play-related operation of the electronic device in the method 900.

Optionally, in some embodiments, the device 1100 may further include a processing unit, configured to perform a processing-related operation of the electronic device in the method 900.

Optionally, in some embodiments, the device 1100 may further include a transceiver unit. The transceiver unit may communicate with the outside, and the transceiver unit may also be referred to as a communication interface or a communication unit.

Optionally, in some embodiments, the device 1100 may further include a storage unit. The storage unit may be configured to store instructions and/or data, and the processing unit 1110 may read the instructions and/or the data in the storage unit.

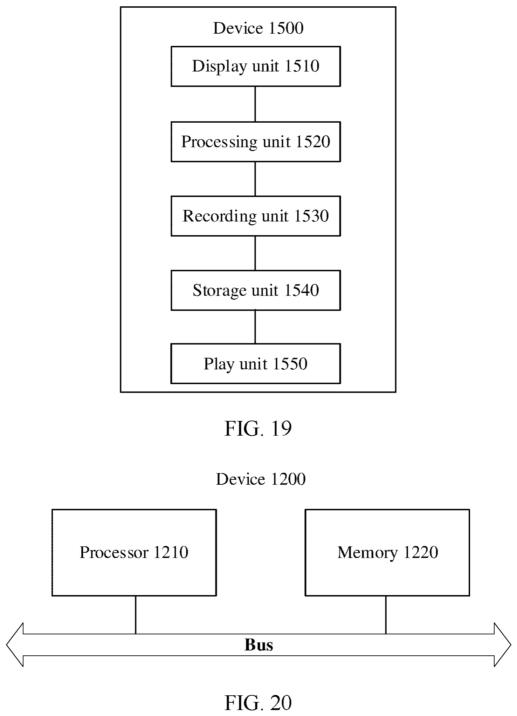

FIG. 19 is a block diagram of still another device according to an embodiment of this application.

For example, as shown in FIG. 19, the device 1500 includes a display unit 1510, a processing unit 1520, a recording unit 1530, a storage unit 1540, and a play unit 1550. The display unit 1510 is configured to display a video. The processing unit 1520 is configured to process data, for example, use virtual audio as audio of a first video. The recording unit 1530 is configured to record a video. The storage unit 1540 is configured to store a video. The play unit 1550 is configured to play a video.

Specifically, the device 1500 may be configured to perform an action performed by the electronic device in the method 1300. In this case, the device 1500 may be an electronic device or a component that can be configured in an electronic device. The display unit 1510 is configured to perform a display-related operation of the electronic device in the method 1300. The processing unit 1520 is configured to perform a processing-related operation of the electronic device in the method 1300. The recording unit 1530 is configured to perform a recording-related operation of the electronic device in the method 1300. The storage unit 1540 is configured to perform a storage-related operation of the electronic device in the method 1300. The play unit 1550 is configured to perform a play-related operation of the electronic device in the method 1300.

Optionally, in some embodiments, the device 1500 may further include a transceiver unit. The transceiver unit may communicate with the outside, and the transceiver unit may also be referred to as a communication interface or a communication unit.

FIG. 20 is a diagram of a structure of a device 1200 according to an embodiment of this application.

As shown in FIG. 20, the device 1200 includes one or more processors 1210 and one or more memories 1220. The one or more memories 1220 store one or more programs, and the one or more programs include instructions. When the instructions are run by the one or more processors 1210, the device 1200 is enabled to perform the technical solutions performed by the electronic device in the method 700, the method 800, the method 900, and the method 1300.

An embodiment of this application provides a program product. When the program product is run on an electronic device, the electronic device is enabled to perform the technical solutions in the foregoing embodiments. An implementation principle and technical effects of the program product are similar to those in the foregoing method-related embodiments. Details are not described herein again.

An embodiment of this application provides a readable storage medium. The readable storage medium includes instructions. When the instructions are run on an electronic device, the electronic device is enabled to perform the technical solutions in the foregoing embodiments. An implementation principle and technical effects of the readable storage medium are similar. Details are not described herein again.

An embodiment of this application provides a chip. The chip is configured to execute instructions. When the chip runs, the technical solutions in the foregoing embodiments are performed. An implementation principle and technical effects of the chip are similar. Details are not described herein again.

A person of ordinary skill in the art may be aware that the example units and algorithm steps described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiment described above is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, that is, may be located at one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk drive, a read-only memory (read-only memory, ROM), a random access memory (random access memory, RAM), a magnetic disk, or an optical disc.

In the foregoing embodiments provided in this application, the method provided in embodiments of this application is described from a perspective in which the electronic device (for example, a mobile phone) is used as an execution body. To implement the functions in the method provided in embodiments of this application, the electronic device may include a hardware structure and/or a software module, and the functions are implemented in a form of a hardware structure, a software module, or a combination of a hardware structure and a software module. Whether a function in the functions is performed by using the hardware structure, the software module, or the combination of the hardware structure and the software module depends on particular applications and design constraints of the technical solutions.

According to the context, the term "when" or "after" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)". In addition, in the foregoing embodiments, relationship terms such as first and second are used to distinguish an entity from another entity, but are not intended to limit any actual relationship and sequence between these entities.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different locations in this specification do not necessarily mean referring to a same embodiment, but mean "one or more but not all of embodiments", unless otherwise specifically emphasized in another manner. The terms "include", "comprise", "have", and variants thereof mean "including but not limited to", unless otherwise specifically emphasized in another manner.

All or some of the foregoing embodiments may be implemented by using software, hardware, firmware, or any combination thereof. When software is used for implementation, all or some of the foregoing embodiments may be implemented in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, for example, a server or a data center, into which one or more usable media are integrated. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like. When there is no conflict, the solutions in the foregoing embodiments may be combined for use.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A video recording method, wherein the method comprises:
displaying a first recording interface of a video, wherein the first recording interface comprises an audio control and a recording control, and the first recording interface comprises a target object;
using virtual audio as audio for video recording in response to a first operation performed on the audio control, wherein the virtual audio is audio related to the target object;
recording a first video in response to a second operation performed on the recording control;
storing the first video in response to a third operation performed on the recording control;
displaying a first to-be-played interface, wherein the first to-be-played interface comprises a first play control; and
playing the first video in response to a fourth operation performed on the first play control, wherein when the first video is played, audio of the first video comprises the virtual audio.

2. The method according to claim 1, wherein the method comprises:
displaying a second recording interface of a video, wherein the second recording interface comprises the audio control and the recording control, and the second recording interface comprises the target object;
recording a second video in response to a fifth operation performed on the recording control, wherein the audio control is not selected;
storing the second video in response to a sixth operation performed on the recording control;
displaying a second to-be-played interface, wherein the second to-be-played interface comprises a second play control; and
playing the second video in response to a seventh operation performed on the second play control, wherein when the second video is played, audio of the second video does not comprise the virtual audio, or audio of the second video is inconsistent with the virtual audio.

3. The method according to claim 1 or 2, wherein playing the first video comprises:
playing the virtual audio in a target time, wherein the target time is a time in which a status of the target object changes.

4. The method according to any one of claims 1 to 3, wherein the first to-be-played interface further comprises an edit control, and the method comprises:
displaying at least one of the following in the first to-be-played interface in response to an operation performed on the edit control: a sound effect replacement control, a time alignment control, a sound effect rendering intensity control, and a sound effect deletion control, wherein
the sound effect replacement control is used to change the virtual audio;
the time alignment control is used to perform audio-visual synchronization between the virtual audio and the first video;
the sound effect rendering intensity control is used to adjust intensity of the virtual audio; and
the sound effect deletion control is used to delete the virtual audio from a sound effect corresponding to the first video.

5. The method according to any one of claims 1 to 4, wherein the intensity of the virtual audio is related to at least one of the following: a distance between the target object in the first video and an electronic device, a recording focal length of the first video, and a proportion of the target object in the first video, and the electronic device is a device for recording the first video.

6. The method according to any one of claims 1 to 5, wherein before recording the first video, the method comprises:
displaying an icon in the first recording interface, wherein the icon indicates that the electronic device is in a video recording mode corresponding to a target preset scene, and the target preset scene is related to the virtual audio.

7. A video playing method, wherein the method comprises:
obtaining a first video and first audio corresponding to the first video; and
playing the first video and second audio that matches the first video, wherein
the first audio comprises first target audio, intensity of the first audio is less than a first threshold, the second audio comprises virtual audio, and intensity of the virtual audio is greater than or equal to the first threshold; or
the first audio comprises first ambient audio and first target audio, a signal-to-noise ratio of the first audio is less than a second threshold, the second audio comprises the first ambient audio and virtual audio, and a signal-to-noise ratio of the second audio is greater than the signal-to-noise ratio of the first audio; and
both the first target audio and the virtual audio are audio related to a target object, the first target audio is audio that exists in a scene in which the first video is recorded, and the virtual audio is audio that does not exist in the scene in which the first video is recorded.

8. The method according to claim 7, wherein before playing the first video and the second audio that matches the first video, the method further comprises:
determining, based on content of the first video, that a first preset scene exists in the first video, wherein the target object is related to the first preset scene.

9. The method according to claim 8, wherein before determining, based on the content of the first video, that the first preset scene exists in the first video, the method further comprises:
determining, based on a shooting parameter of the first video, that the first video meets a first condition, wherein
the shooting parameter comprises at least one of the following: a shooting focal length, a shooting range, and a proportion of an object, and the object is any object in the first video; and
the first condition comprises at least one of the following: the shooting focal length of the first video becomes smaller, the shooting range of the first video changes, and the proportion of the object is greater than or equal to a third threshold.

10. The method according to claim 8 or 9, wherein a first interface comprises a first control, the first interface is an interface for obtaining the first video, and the method further comprises:
in response to a first operation performed on the first control, determining, based on the content of the first video, whether the first preset scene exists in the first video.

11. The method according to any one of claims 7 to 10, wherein before playing the virtual audio, the method further comprises:
determining that there is an object status change event for the target object in the first video.

12. The method according to any one of claims 7 to 11, wherein before playing the first video and the virtual audio, the method further comprises:
performing audio-visual synchronization between the virtual audio and the first video.

13. The method according to claim 12, wherein the first video is a preview video or a video being recorded, and performing audio-visual synchronization between the virtual audio and the first video comprises:
predicting a status of the target object in the first video based on the first video, and obtaining a first status change time of the target object; and
playing the virtual audio in the first status change time.

14. The method according to claim 12, wherein the first video is a recorded video, and performing audio-visual synchronization between the virtual audio and the first video comprises:
determining a second status change time of the target object in the first video based on the first video; and
playing the virtual audio in the second status change time.

15. The method according to any one of claims 7 to 14, wherein the intensity of the virtual audio is related to at least one of the following: a distance between the target object in the first video and an electronic device, a recording focal length of the first video, and a proportion of the target object in the first video, and the electronic device is a device for recording the first video.

16. The method according to any one of claims 7 to 15, wherein a second interface comprises a second control, the second interface is an interface for playing the first video, and after playing the virtual audio, the method further comprises:
displaying a third control, a fourth control, a fifth control, and a sixth control in the second interface in response to a second operation performed on the second control; and
changing the virtual audio in response to a third operation performed on the third control; and/or
performing audio-visual synchronization between the virtual audio and the first video in response to a fourth operation performed on the fourth control; and/or
adjusting the intensity of the virtual audio and/or intensity of the second audio in response to a fifth operation performed on the fifth control; and/or
skipping playing the virtual audio in response to a sixth operation performed on the sixth control.

17. A video playing method, wherein the method comprises:
obtaining a second video and third audio corresponding to the second video, wherein a signal-to-noise ratio of the third audio is greater than or equal to a second threshold; and
playing the second video and fourth audio corresponding to the second video, wherein content of the fourth audio is the same as content of the third audio, and a signal-to-noise ratio of the fourth audio is greater than the signal-to-noise ratio of the third audio.

18. The method according to claim 17, wherein before playing the second video and the fourth audio corresponding to the second video, the method further comprises:
determining, based on content of the second video and/or the content of the third audio, that a second preset scene exists in the second video.

19. The method according to claim 18, wherein determining, based on the content of the third audio, that the second preset scene exists in the second video comprises:
when the third audio comprises second target audio, determining that the second preset scene exists in the second video, wherein the second target audio is related to the second preset scene.

20. The method according to claim 18 or 19, wherein before determining, based on the content of the second video and/or the content of the third audio, that the second preset scene exists in the second video, the method further comprises:
determining, based on a shooting parameter of the second video, that the second video meets a second condition, wherein
the shooting parameter comprises at least one of the following: a shooting focal length, a shooting range, and a proportion of an object, and the object is any object in the second video; and
the second condition comprises at least one of the following: the shooting focal length of the second video becomes smaller, the shooting range of the second video changes, and the proportion of the object is greater than or equal to a fourth threshold.

21. The method according to any one of claims 18 to 20, wherein a first interface comprises a first control, the first interface is an interface for obtaining the second video, and the method further comprises:
in response to a first operation performed on the first control, determining, based on the content of the second video and/or the content of the third audio, whether the second preset scene exists in the second video.

22. The method according to any one of claims 17 to 21, wherein before playing the second video and the fourth audio corresponding to the second video, the method further comprises:
determining that there is an object status change event for a target object in the second video, wherein the target object is related to the second preset scene.

23. The method according to any one of claims 17 to 22, wherein the signal-to-noise ratio of the fourth audio is related to at least one of the following: a distance between the target object in the second video and an electronic device, a recording focal length of the second video, and a proportion of the target object in the second video, and the electronic device is a device for recording the second video.

24. The method according to any one of claims 17 to 23, wherein a second interface comprises a second control, the second interface is an interface for playing the second video, and after playing the second video and the fourth audio corresponding to the second video, the method further comprises:
displaying a third control, a fourth control, a fifth control, and a sixth control in the second interface in response to a second operation performed on the second control; and
changing the fourth audio in response to a third operation performed on the third control; and/or
performing audio-visual synchronization between the fourth audio and the second video in response to a fourth operation performed on the fourth control; and/or
adjusting intensity of the fourth audio and/or intensity of third target audio in the fourth audio in response to a fifth operation performed on the fifth control, wherein the third target audio is related to the second preset scene; and/or
skipping playing the fourth audio in response to a sixth operation performed on the sixth control.

25. A video playing method, wherein the method comprises:
displaying an interface of a third video, and playing audio corresponding to the third video, wherein
a recording mode of the third video is a slow-motion recording mode or a fast-motion recording mode; and
the interface comprises a first control, and the first control is used to adjust pitch of the audio.

26. The method according to claim 25, wherein the method further comprises:
adjusting the pitch of the audio to a target pitch value in response to a first operation performed on the first control.

27. The method according to claim 25 or 26, wherein the interface further comprises a switch, and when the switch is in an on state, the audio corresponding to the third video is audio obtained through time stretching with pitch preservation.

28. The method according to claim 27, wherein in the slow-motion recording mode or the fast-motion recording mode, the switch is in an off state by default.

29. An electronic device, comprising a module configured to perform the method according to any one of claims 1 to 28.

30. An electronic device, comprising:
one or more processors;
one or more memories; and
one or more programs, wherein the one or more programs are stored in the one or more memories, the one or more programs comprise instructions, and when the instructions are executed by the one or more processors, the electronic device is enabled to perform the method according to any one of claims 1 to 28.

31. A readable storage medium, comprising instructions, wherein when the instructions are run on an electronic device, the electronic device is enabled to perform the method according to any one of claims 1 to 28.

32. A chip, comprising at least one processor and an interface circuit, wherein the interface circuit is configured to provide program instructions or data to the at least one processor, and the at least one processor is configured to execute the program instructions, to implement the method according to any one of claims 1 to 28.

33. A program product, wherein the program product comprises instructions for performing the method according to any one of claims 1 to 28.
